# EUROPEAN PATENT SPECIFICATION

(11) **EP 2 616 501 B1**
(45) Date of publication and mention of the grant of the patent: **06.12.2017**
(21) Application number: 11761158.2
(22) Date of filing: 16.09.2011
(51) Int. Cl.: C08G 83/00, C08L 101/00, C08J 5/22, C02F 1/469

(54) **APPARATUS FOR REMOVAL OF IONS COMPRISING AN ION EXCHANGE MEMBRANE THAT COMPRISES A CROSSLINKED HYPERBRANCHED (CO)POLYMER (A CROSSLINKED HBP) WITH ION EXCHANGE GROUPS**
VORRICHTUNG ZUR ENTFERNUNG VON IONEN MIT EINER IONENAUSTAUSCHMEMBRAN MIT EINEM VERNETZTEN HYPERVERZWEIGTEN (CO) POLYMER (VERNETZTES HBP) MIT IONENAUSTAUSCHGRUPPEN
APPAREIL D'ÉLIMINATION D'IONS COMPRENANT UNE MEMBRANE ÉCHANGEUSE D'IONS QUI COMPREND UN (CO)POLYMÈRE HYPERRAMIFIÉ RÉTICULÉ (UN HBP RÉTICULÉ) AYANT DES GROUPES D'ÉCHANGE D'IONS

(30) Priority: 16.09.2010 EP 10177069
(43) Date of publication of application: 24.07.2013
(73) Proprietor: Voltea B.V., 2171 AE Sassenheim (NL)
(72) Inventor: VAN DER WAL, Albert, NL-2341 LP Oegstgeest (NL); REINHOUDT, Hank, Robert, NL-2613 OS Delft (NL); JANSSEN, Henricus, Marie, NL-5625 AM Eindhoven (NL); VAN HOUTEM, Michel, Henri, Chretien, Joseph, NL-5613 MC Eindhoven (NL)
(74) Representative: EP&C
(86) International application number: PCT/NL2011/050627
(87) International publication number: WO 2012/036554

(56) References cited:
- US-A1- 2008 144 256
- BHARDWAJ R ET AL: "Modification of brittle polylactide by novel hyperbranched polymer-based nanostructures", BIOMACROMOLECULES, vol. 8, no. 8, 3 July 2007 (2007-07-03), pages 2476-2484, XP002624274, AMERICAN CHEMICAL SOCIETY US DOI: 10.1021/BM070367X
- ITOH T ET AL: "Proton-conducting electrolyte membranes based on hyperbranched polymer with a sulfonic acid group for high-temperature fuel cells", ELECTROCHIMICA ACTA, vol. 55, no. 4, 25 January 2010 (2010-01-25), pages 1419-1424, XP002624273, ELSEVIER LTD GBR DOI: 10.1016/J.ELECTACTA.2009.02.030
- PANDEY A K ET AL: "Formation and characterization of highly crosslinked anion-exchange membranes", JOURNAL OF MEMBRANE SCIENCE, vol. 217, no. 1-2, 1 June 2003 (2003-06-01), pages 117-130, XP004428534, ELSEVIER SCIENTIFIC PUBL.COMPANY. AMSTERDAM, NL ISSN: 0376-7388, DOI: 10.1016/S0376-7388(03)00084-X

## Description

### Field of the invention

The invention relates to an apparatus for removal of ions. In particular to an apparatus for purifying aqueous solutions. Such an apparatus may comprise an ion exchange membrane.

The invention further also relates to ion exchange membranes comprising a polymer with ion exchange groups and to a method for preparing such a polymer.

### Background art

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for water purification is by capacitive deionisation, using an apparatus provided with a flow through capacitor (FTC) for removal of ions from water. The FTC functions as an electrically regenerable cell for capacitive deionisation. By charging electrodes, ions are removed from an electrolyte and are held in electric double layers at the electrodes. The electrodes can be (partially) electrically regenerated to desorb such previously removed ions without requiring a chemical treatment.

An apparatus for removal of ions generally comprises one or more pairs of spaced apart electrodes (a cathode and an anode) and a spacer, separating the electrodes and allowing water to flow between the electrodes. The apparatus is provided with a housing comprising a water inlet for letting water in the housing and a water outlet for letting water out of the housing. In the housing of the apparatus for removal of ions the layers of electrodes and spacers are stacked in a "sandwich" fashion by compressive force, normally by mechanical fastening.

A membrane may be placed adjacent to an electrode of a flow through capacitor. The term membrane may refer to a layer of material which is permeable or semi-permeable for ions and which is capable of retaining ions. A membrane may allow an increase in ion removal efficiency, which in turn may allow energy efficient ion removal from aqueous solutions. Membranes may be sensitive to swelling when brought into contact with water, swelling may exert unwanted stress in the membrane layer(s) which can lead to curling or even delaminating and/or detachment of the membrane.

Membranes may comprise ion exchange groups (WO 2009/062872). Ion exchange groups may provide a charge to the membrane. For example, when a cation exchange group is used, the membrane is negatively charged. The negative charge of the membrane may repel negative ions, while attracting positive ions, resulting in the membrane being selective for positively charged ions, i.e. cations. Alternatively, when an anion exchange group is used, the membrane is positively charged. The positive charge of the membrane may repel positive ions, while attracting negative ions, resulting in the membrane being selective for negatively charged ions, i.e. anions. Ion exchange membranes are therefore either selective for anions, or selective for cations.

Patent document US 2008/144256 A1 discloses an electrode assembly for supercapacitor desalination device comprising an anion exchange material membrane. The membrane can be formed by a crosslinked material wherein dimethyl-aminoethyl-methacrylate reacts with N,N'-Methylenebisacrylamide in presence of an initiator, forming an anion exchange material. An anion exchange material can be made also by reacting an amine with an epoxy and thereafter by quaternizing the reaction product with a halide so that quaternary ammonium groups are formed.

Article by Bhardwaj R., et. al., entitled "Modification of brittle polylactide by novel hyperbranched polymer-based nanostructures", Biomacromolecules, vol.8, pages 2476-2484, published on the 3rd July 2007, describes a process where an hyperbranched polymer is crosslinked with polyanhydride, wherein the hyperbranched polymer is obtained by reacting pentaerythritol (core) with 2,2-bis-methylolpropionic acid as chain extender.

Article by Itoh T., et. al., entitled "Proton-conducting electrolyte membranes based on hyperbranched polymer with a sulfonic acid group for high-temperature fuel cells", Electrochimica Acta, vol. 55, pages 1419-1424, published on the 25th January 2010, describes a cross-linked cationic hyperbranched polymer electrolyte membrane obtained by crosslinking an hyperbranched polymer with both a sulfonic group as a functional group and an acryloyl group as a crosslinker at terminals with benzoyl peroxide.

Article by Pandey A., et al. entitled: "Formation and characterization of highly crosslinked anion-exchange membranes", Journal of membrane Science, vol. 217 no. 1-2, pages 117-130, published on the 1st June 2003, describes a highly crosslinked/hyperbranched anion-exchange membrane. The membrane has been obtained by crosslinking poly(vinylbenzyl chloride) (PVBCI) with 1,4-diazabicyclo[2.2.2]octane (DABCO) and then further treating this membrane with an excess of tetraethylenepentamine to obtain an crosslinked/ hyperbranched polymer. This hyperbranched polymer is further crosslinked with dibromo-p-xylene to obtain quaternary ammonium groups.

### Summary of the invention

It is an object of the invention to provide an apparatus for removal of ions with an improved membrane. It is also an object of the invention to provide an improved membrane, and to provide for a method for preparing an improved membrane. According to the present invention a method for preparing a crosslinked hyperbranched (co)polymer with ion exchange groups is disclosed. The method comprises the steps of:
- providing a hyperbranched (co)polymer being a methacrylate or acrylamide based polymer;
- providing a crosslinkers;
- crosslinking the hyperbranched (co)polymer with the crosslinker;
wherein during the crosslinking step an ion exchange group is formed, wherein the ion exchange group is an anion exchange group, wherein the reactive group of the hyperbranched (co)polymer is a tertiary amine,
a pyridine, a guanidine and/or a phosphine group and the reactive group of the crosslinker is a halide, tosylate, mesylate or triflate group, wherein the hyperbranched (co)polymer and crosslinker comprise reactive groups that are capable of reacting with each other forming a covalent bond and the quaternary ammonium, pyridinium, guanidinium or phosphonium anion exchange group, wherein the hyperbranched (co)polymer is prepared by a method comprising the steps of:
- providing one or more branching monomer(s),
- providing one or more co-monomer(s),
- providing an initiator, preferably a free radical initiator, and
- reacting the branching monomer(s), the co-monomer(s), and the initiator to form a hyperbranched (co)polymer;
and wherein the hyperbranched (co)polymer comprises a branching monomer that comprises at least two vinyl groups, and a co-monomer that comprises one vinyl, wherein the vinyl groups are suitable for addition polymerization, and wherein one or more (co)monomers comprise a tertiary amine, a pyridine, a guanidine and/or phosphine group as a precursor to the ion exchange groups. Membranes comprising a crosslinked HBP with ion exchange groups can be used in an apparatus for removal of ions from water.

The invention thus relates to an apparatus for removal of ions, comprising a membrane which comprises the crosslinked hyperbranched (co)polymer (HBP) with ion exchange groups obtained by the method of the present invention. In particular, the invention relates to an apparatus comprising the obtained crosslinked HBP with ion exchange groups as described below. The invention also relates to an ion exchange membrane comprising the obtained crosslinked HBP. Accordingly, the invention further provides the use of a crosslinked hyperbranched (co)polymer with ion exchange groups according to the invention, an ion exchange membrane according to the invention, or an apparatus according to the invention, for the removal of ions from water.

### Brief description of the figures

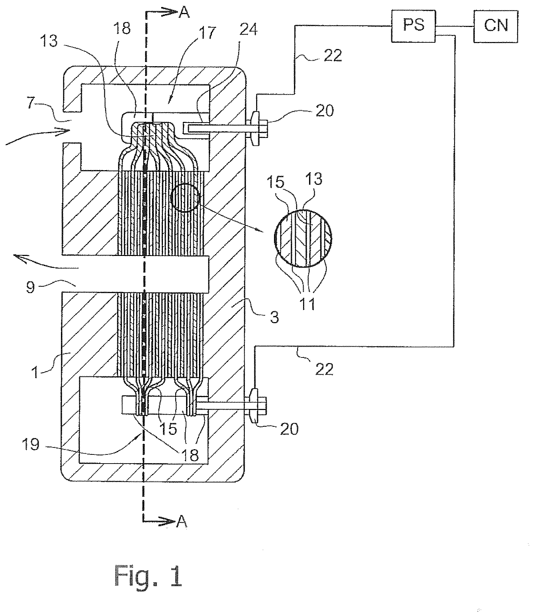

Embodiments of the invention will be described, by way of example only, with reference to the accompanying schematic drawings (Figures 1-5) in which corresponding reference symbols indicate corresponding parts of an apparatus for removal of ions.

### Detailed description of the invention

### The apparatus

In one aspect of the invention, an apparatus is provided for removal of ions, the apparatus being provided with a housing comprising:
- a water inlet for letting water in the housing;
- a water outlet for letting water out of the housing;
- a first and second electrode;
- a spacer between the first and second electrode for allowing water to flow in between the first and second electrode; and
- an ion exchange membrane between the first and/or second electrode and the spacer;
wherein the membrane is obtained by the method comprising the steps of:
- providing a hyperbranched (co)polymer being a methacrylate or acrylamide based polymer;
- providing a crosslinkers;
- crosslinking the hyperbranched (co)polymer with the crosslinker;
wherein during the crosslinking step an ion exchange group is formed, wherein the ion exchange group is an anion exchange group, wherein the reactive group of the hyperbranched (co)polymer is a tertiary amine,
a pyridine, a guanidine and/or a phosphine group and the reactive group of the crosslinker is a halide, tosylate, mesylate or triflate group, wherein the hyperbranched (co)polymer and crosslinker comprise reactive groups that are capable of reacting with each other forming a covalent bond and the quaternary ammonium, pyridinium, guanidinium or phosphonium anion exchange group, wherein the hyperbranched (co)polymer is prepared by a method comprising the steps of:
- providing one or more branching monomer(s),
- providing one or more co-monomer(s),
- providing an initiator, preferably a free radical initiator, and
- reacting the branching monomer(s), the co-monomer(s), and the initiator to form a hyperbranched (co)polymer;
and wherein the hyperbranched (co)polymer comprises a branching monomer that comprises at least two vinyl groups, and a co-monomer that comprises one vinyl, wherein the vinyl groups are suitable for addition polymerization, and wherein one or more (co)monomers comprise a tertiary amine, a pyridine, a guanidine and/or phosphine group as a precursor to the ion exchange groups.

Figure 1 shows a schematic cross-section of an apparatus for removal of ions according to the invention. The apparatus may have a housing comprising a first housing part 1 and a second housing part 3 made of a relatively hard material e.g. a hard plastic. By pressing the first and second housing parts on each other, for example with a bold and nut (not shown) the housing is made water tight. Adhesive, seals or O-rings may be used to improve the watertightness of the housing.

The housing is provided with a water inlet 7 and a water outlet 9. During ion removal from the water, the water will flow from the inlet 7 to the outlet 9 through the spacers 11 which separates the first electrode and the second electrode from each other. The electrodes are clamped within the housing to provide a water leakage free apparatus. By creating an electrical potential difference between the first and second electrode, for example by applying a positive voltage to the current collector of the first electrode (the anode) 13 and a negative voltage to the current collector of the second electrode (cathode) 15 the anions of the water flowing through the spacer 11 are attracted to the first electrode and the cations are attracted to the second electrode. In this way the ions (anions and cations) will be removed from the water flowing through the spacer 11. In between the electrodes and the spacer (i.e. between 11 and 13 and/or between 11 and 15), an ion exchange membrane according to the invention is positioned.

If the electrodes are saturated with ions the electrodes may be regenerated by releasing the potential difference and electrically discharging the electrodes. This will the ions will be released form the electrodes into the water flowing through the spacer. This will result in an increase in the ion content in the water in the spacer and this water will be flushed out of the spacer. Once most ions are released from the electrodes and the water with increased ion content is flushed out of the spacer the electrodes are regenerated and can be used again for attracting ions.

The electrical potential differences between the anode and the cathode are rather low, for example lower than 2 Volt, preferably lower than 1,7 Volt and even more preferably lower than 1,4 Volt. It is important that the electrical resistance of the electrical circuit is sufficiently low. It is therefore important to use ion exchange membranes that have a low electrical resistance and which are at the same time cheap enough to make them cost effective. These membranes may preferentially be selective for example for anions or cations or for certain anion species or for certain cation species. It is one of the objectives of the present invention to provide membranes to be used in a FTC device for improved desalination efficiency.

The electrodes to be used in the apparatus for removal of ions may be made substantially metal free to keep them corrosion free in the wet interior of the housing and at the same time cheap enough for mass production. The electrodes may be produced from a current collector 13, 15 provided with a substantially metal free electrically conductive high surface area layer, or self supporting film, which may contain activated carbon, carbon nanotubes or carbon aerogels on both sides which are in contact with the water. The electrode is provided with a material to store ions, for example a high surface area layer which is a layer with a high surface area in square meter per weight of layer material e.g.>500m²/gr.

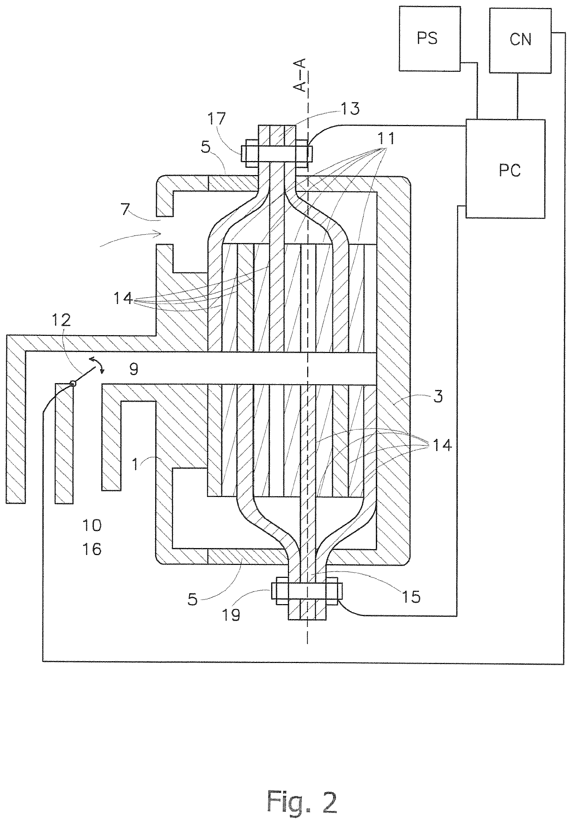

Figure 2 shows a schematic cross-section of an apparatus for removal of ions according to the invention. The apparatus has a housing comprising a first housing part 1 and a second housing part 3 made of a relatively hard material e.g. a hard plastic. A third housing part 5 is made of a relatively soft material e.g. rubber, filler or glue. By pressing the first, second and third housing parts on each other, for example with a bold and nut (not shown) the housing is made water tight.

The housing is provided with a water inlet 7 and a water outlet 9. During ion removal of the water, the water will flow from the inlet 7 to the outlet 9 through the spacers 11 which separates a first electrode 13 and a second electrode 15 of a flow through capacitor (FTC) from each other. The electrodes are clamped within the housing to provide a water leakage free apparatus. By creating an electrical potential difference between the first and second electrode by a power converter PC, for example by connecting a positive voltage to the first electrode (the anode) 13 and a negative voltage to the second electrode (cathode) 15 the anions of the water flowing through the spacer 11 are attracted to the first electrode and the cations are attracted to the second electrode. In this way the ions (anions and cations) will be removed from the water flowing through the spacer 11. The purified water may be discharged to the purified water outlet 10 by the valve 12. If the surface of the electrodes is saturated with ions the electrodes may be regenerated by reducing or even reversing the potential difference. This will release the ions in the water flowing through the spacer. This will increase the ion content in the water and this water will be flushed away by closing the purified water outlet 10 with a valve 12 under control of the controller CN and opening the waste water outlet 16. Once most ions are released from the electrodes and the water with increased ion content is flushed away via the waste water outlet 16 the electrodes are regenerated and can be used again for attracting ions.

The electrical potential differences between the anode and the cathode are rather low, for example lower than 2 Volt, preferably lower than 1.7 Volt and even more preferably lower than 1.4 Volt. A power converter PC under control of the controller CN is used to convert the power from the power source PS to the right electrical potential. It is important that the electrical resistance of the electrical circuit is low. For this purpose, different parts of the first electrode 13 are connected to each other with the first connector 17 and different parts of the second electrode 15 are connected to each other with the second connector 19. The electrodes 13, 15 may be made substantially metal free to keep them corrosion free in the wet interior of the housing and at the same time cheap enough for mass production. The electrodes 13, 15 may be produced from a current collector provided with a substantially metal free electrically conductive high surface area layer, or self-supporting film, which may contain activated carbon or carbon aerogels on both sides which are in contact with the water. A high surface area layer is a layer with a high surface area in square meter per weight of layer material.

A membrane 14 may be positioned in between the first and/or second electrode and the spacer. The membrane may be less than 200 micrometers, preferably less than 100 micrometers, more preferably less than 60 micrometers thick.

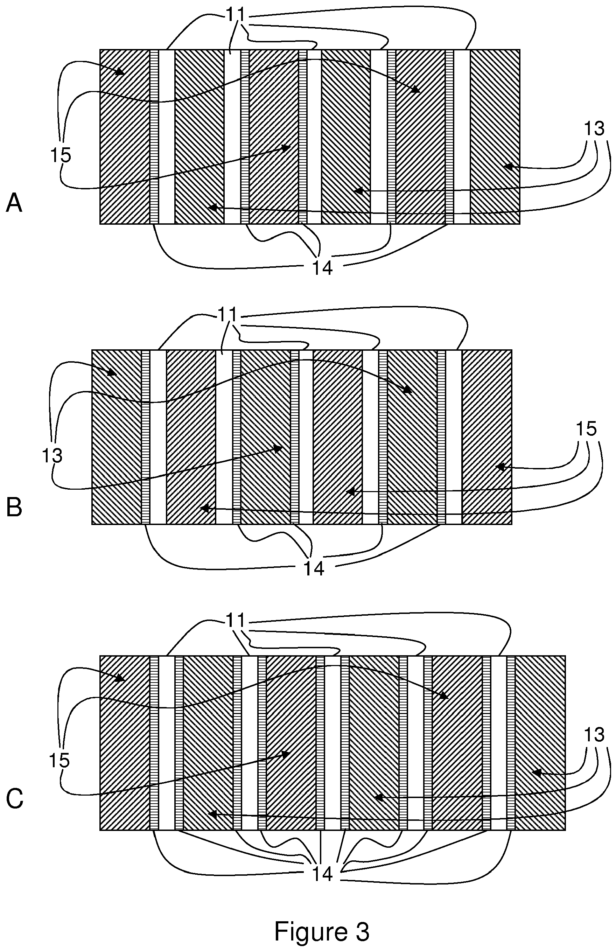

Membrane 14 comprises the crosslinked hyperbranched (co)polymer obtained by the method disclosed above. Figure 3 shows schematics of stacking of electrodes, spacers and membranes. The first (13) and second (15) electrodes are stacked with a spacer (11) and an ion exchange membrane (14) comprising a crosslinked hyperbranched (co)polymer with ion exchange groups. (A) The ion exchange membrane (14) is positioned between the second electrode (15) and the spacer (11). (B) The ion exchange membrane (14) is positioned between the first electrode (13) and the spacer (11). (C) The ion exchange membrane (14) is positioned between the first electrode (13) and the spacer (11) and the second electrode (15) and the spacer (11).

### Method of preparation of an anion exchange membrane according to the present invention

In one aspect of the invention, a method is provided for preparing a crosslinked hyperbranched (co)polymer with ion exchange groups according to the present invention comprising the steps of:providing a hyperbranched (co)polymer being a methacrylate or acrylamide based polymer; providing a crosslinker; crosslinking the hyperbranched (co)polymer with the crosslinker; wherein during the crosslinking step an ion exchange group is formed, wherein the ion exchange group is an anion exchange group, wherein the reactive group of the hyperbranched (co)polymer is a tertiary amine, a pyridine, a guanidine and/or a phosphine group and the reactive group of the crosslinker is a halide, tosylate, mesylate or triflate group, wherein the hyperbranched (co)polymer and crosslinker comprise reactive groups that are capable of reacting with each other forming a covalent bond and the quaternary ammonium, pyridinium, guanidinium or phosphonium anion exchange group, wherein the hyperbranched (co)polymer is prepared by a method comprising the steps of: providing one or more branching monomer(s), - providing one or more co-monomer(s), - providing an initiator, preferably a free radical initiator, - and reacting the branching monomer(s), the co-monomer(s), and the initiator a hyperbranched (co)polymer; and wherein the hyperbranched (co)polymer comprises a branching monomer comprises at least two vinyl groups, and a co-monomer that comprises one vinyl, wherein the vinyl groups are suitable for addition polymerization, and wherein one or more (co)monomers comprises a tertiary amine, a pyridine, a guanidine and/or phosphine group as a precursor to the ion exchange groups.

### The hyperbranched (co)polymer

According to the invention, the provided hyperbranched (co)polymer (HBP), may be prepared by any method known in the art. Methods for preparing HBPs have been described, e.g. as reviewed by Gao and Yan, Prog.Polym.Sci., 29, 2004, 183-275 and by Voit and Lederer, Chem.Rev. 2009, 109, 5924-5973. Hyperbranched (co)polymers are a subclass of a class of macromolecules called dendritic polymers. As the name implies, hyperbranched (or dendritic) (co)polymers have a high degree of branching, furthermore, they can have a high density of functional groups, small size, and/or low dispersity. The class of dendritic polymers can be divided in subclasses, in: dendrimers, dendrigrafts and hyperbranched (co)polymers. Dendrimers are artificial macromolecules, which are synthesized through a step-wise process. On the other end of the spectrum are hyperbranched (co)polymers which are generally produced in a one-step process. The hyperbranched (co)polymer according to the present invention is based on a methacrylate or an acrylamide polymer prepared by a method comprising the steps of: providing one or more branching monomer(s), - providing one or more co-monomer(s), - providing an initiator, preferably a free radical initiator, - and reacting the branching monomer(s), the co-monomer(s), and the initiator a hyperbranched (co)polymer; and wherein the hyperbranched (co)polymer comprises a branching monomer comprises at least two vinyl groups, and a co-monomer that comprises one vinyl, wherein the vinyl groups are suitable for addition polymerization.

As an HBP is in general produced in a one-step process, the branching of the HBP may be less well or not controlled and may be of random nature. Hence, when a HBP is prepared, it is in general not homogeneous, i.e. comprising a collection of identical HBP molecules, but it comprises a heterogeneous population of HBP molecules. Hence, when the term a hyperbranched (co)polymer or HBP is used, it may comprise such a heterogeneous collection of hyperbranched (co)polymer molecules. The term HBP may also comprise a mixture of at least two different hyperbranched (co)polymers (differing by their method of preparation and/or composition), which at least two differently prepared hyperbranched (co)polymers by themselves may be heterogeneous.

The term HBP may also refer to an HBP molecule. As used herein, the singular forms, e.g. "a," "an" and "the" may include plural referents, unless the context clearly dictates otherwise. For example, a method for preparing "a" HBP, as used herein, includes preparing the plurality of HBP molecules (e.g. 10's, 100's, 1000's, 10's of thousands, 100's of thousands, millions, or more molecules). In addition, "providing a crosslinker", as used herein, includes providing a plurality of molecules (e.g. 10's, 100's, 1000's, 10's of thousands, 100's of thousands, millions, or more molecules).

As HBPs may be heterogeneous, a HBP may be defined by its method of preparation (see below), as the polymerization is a statistical process defined by the reaction conditions, e.g. molar amounts and/or ratios of reactants used for the preparation of an HBP. Alternatively, a HBP may also be defined by a particular size range, an average degree of branching, the average degree of functionalization with ion exchange groups and/or degree of functionalization with complementary reactive groups. Thus, according to the invention, when the term a hyperbranched (co)polymer or HBP is used, it may include such a heterogeneous population.

The hyperbranched (co)polymer according to the invention preferably has a number average molecular weight (Mn) in the range of 250 Dalton to 100.000 Dalton, more preferably from 500 Dalton to 50.000 Dalton, even more preferably from 750 to 25.000 Dalton, and most preferably a molecular weight of 1000 to 10.000 Dalton. The molecular weight distribution or dispersity D, or polydispersity index PDI is calculated by dividing the weight average molecular weight by the number average molecular weight: D = PDI = Mw/Mn. The PDI of a HBP is preferably from 1.0 (for a single molecule) to 15, more preferably from 1.5 to 12 and most preferably from 2 to 6. These PDI index ranges represent molecular weight distributions that are regarded as relatively broad or polydisperse. Both the weight average molar mass and the number average molar mass of a HBP can be determined by using e.g. gel permeation chromatography (GPC), also known as size exclusion chromatography, SEC), using reference polymer standards, such as polystyrene (PS) standards or (PEO) polyethylene oxide standards.

In general, hyperbranched (co)polymers may be prepared from at least a branching monomer (see below for a more detailed description on the preparation of HBPs). In addition to a branching monomer, also co-monomers may be used. A branching monomer is a monomer that after polymerization may have led to a branching point, so that the polymer molecule at this branching point can grow in three or more directions. A branching monomer may therefore be defined as a molecule that can grow, i.e. polymerize, in at least three directions during the polymerization reaction. Thus, a branching monomer, can react at at least three different positions during polymerization, resulting in chain growth at at least three different positions. Co-monomers are not branching monomers, and can react with the branching monomers in the polymerization reaction. A co-monomer may grow in the polymerization reaction in two directions, reacting with another co-monomer or branching monomer. Furthermore, a chain transfer agent may be used in the polymerization which may terminate polymerization at a particular position, which may control the growth of HBPs during the polymerization reaction. In the preparation of HBP, the chemistry, the reactants and/or the set of monomers is preferably chosen such that HBP molecules during the polymerization reaction may be prevented from reacting with each other, preventing crosslinking. This way, gelation may be prevented. The HBP formed may be soluble.

The (average) extent of branching or degree of branching of hyperbranched polymers has been defined in literature in various and different definitions (see e.g. Voit and Lederer, Chem.Rev. 2009, 109, 5924-5973, O'Brien, Polymer, 41, 2000, 6027-6031). Most of these definitions use the fractions of units at the termini, branching units and linear units in a material to determine the degree of branching. However, this may be often difficult, if not impossible, to reliably assess experimentally for many HBPs. An alternative way to define the degree of branching is by the relative amount of a branching monomer(s) used in the preparation of a HBP, and by the extent of incorporation of a branching monomer(s) into a HBP.

In one embodiment, according to the invention, the branching monomer(s) is used in excess of 0.5% mol/mol%, preferably in excess of 2 mol/mol%, more preferably in excess of 5 mol/mol% and most preferably in excess of 7 mol/mol%. These percentages are relative with regard to the reactants used, i.e. branching monomers, co-monomers, and/or chain transfer agents. Also, the amount of branching monomer used may preferably be less than 50 mol/mol %, more preferably less than 40 mol/mol%, most preferably less than 25 mol/mol%. These molar percentages can be calculated from the used molar amounts of reactants.

The HBP may comprise in excess of 2 mol/mol%, preferably in excess of 4 mol/mol%, more preferably in excess of 7 mol/mol% and most preferably in excess of 10 mol/mol%, of branching monomer. These percentages are relative to all reactants (i.e. branching monomers, co-monomers, and/or chain transfer agents). These molar percentages of incorporated branching monomer(s) can be derived from experimental data, for example from ¹H NMR spectra that can be recorded from an HBP. Usually, the different monomers and reactants that are incorporated into the HBP have characteristic resonances in ¹H NMR, and from the integrations of these signals quantitative data can be derived, such as the molar ratios of incorporated monomers and reactants (see example section). A HBP may comprise, on average at least 0.2 branching monomer unit per molecule HBP, preferably at least 1 branching monomer unit, more preferably at least 2 units, most preferably at least 3 units. These numbers can be derived from combined ¹H NMR spectral data and number average molecular weight (Mn) data. Also, on average at least 1 branching monomer units may be incorporated per HBP-molecule, preferably at least 2 branching monomer units, more preferably at least 4 units, most preferably at least 6 units. These data can be estimated from combined ¹H NMR and weight average molecular weight (Mw) data. The Mn and Mw data can be determined by for example GPC measurements, where these data are relative to those of PS or PEO standards.

A HBP may be amorphous or may be semi-crystalline. However, due to the heterogeneity and irregular molecular structures in HBP materials, these are usually amorphous. Crystallization processes that may occur over time may influence the performance of ion exchange membranes negatively, for example because crystallization may result in stresses that cause cracking of membrane materials. Amorphous HBPs may therefore preferred. HBPs may have Tg's ranging from -60 °C to 180 °C, preferably from - 40 °C to 135 °C, more preferably from -20 °C to 90 °C, most preferably from 0 °C to 70 °C, where these Tg's, can be recorded experimentally with differential scanning calorimetry as shown in the examples (DSC). The HBP according to the present invention is a methacrylate based HBP or an acrylamide based HBP.

### The crosslinker; and the HBP

For the preparation of the crosslinked HBP with ion exchange groups at least a HBP and a crosslinker is provided. The crosslinker according to the invention may comprise (on average) preferably two reactive groups, although three or more reactive groups are also possible. The HBP according to the invention has reactive groups that enable reaction, forming a covalent bond, with the crosslinker. The average number of these reactive groups per HBP-molecule is at least 2, preferably at least 4, more preferably at least 6 and most preferably at least 10. An average number of reactive groups per HBP-molecule may also further describe the HBP as a HBP usually represents a heterogeneous mixture of macromolecules.

Control over properties and performance of the crosslinked HBP with ion exchange groups may be exerted by choosing the proper ratio between the HBP and crosslinker, as this may determine the molar equivalence between the reactive groups on the HBP and crosslinker. Levels of crosslinking can thus be controlled, as well as the concentration of the ion exchange groups in the crosslinked hyperbranched (co)polymer with ion exchange groups. The crosslinking reaction may be performed with the aid of solvents (e.g. alcohols or non-protic solvents), reagents (e.g. non-nucleophilic bases such as diisopropylethyl amine), activating agents (e.g. carbodiimide agents in reactions between acid and amine reactive groups) and/or catalysts (e.g. metal catalysts in reactions between alcohols and isocyanates). The reaction conditions may also be varied with regard to temperature, performing the reaction under inert gases such as argon or nitrogen, and/or using a light source as reaction initiator or stimulus.

The reactive groups of the crosslinker react with reactive groups present in the HBP. Thus, when one of the reactive groups of a crosslinker molecule reacts with a reactive group on a HBP molecule, the crosslinker molecule is covalently bound with the HBP molecule. When the other reactive group of the crosslinker reacts with another HBP molecule, forming a covalent bond with the other HBP molecule, the crosslinker has formed a crosslink between two HBP molecules. Hence, when between HBP molecules crosslinks are formed, a crosslinked HBP is formed. HBPs may have a large number of reactive groups such that multiple crosslinks between HBPs may occur, and a network of crosslinked HBPs is formed. The crosslinked HBP with ion exchange groups thus formed, may have gel like or solid like properties. The reactive groups of the crosslinker and HBP may be complementary, such that crosslinkers may not react with each other, and/or HBPs may not react with each other, such that a crosslinker preferably reacts with a HBP. As HBPs have a large number of reactive groups, multiple crosslinks between HBP-molecules may be formed, so that the crosslinker has enabled the formation of a covalently connected network of HBP molecules.

It is possible that to some extent one of the reactive groups of a crosslinker molecule may react with a reactive group on a HBP-molecule, while the other reactive group of the same crosslinker molecule may react with a second reactive group of the same HBP-molecule, thus forming a covalent connection within one HBP-molecule that does not contribute to network formation between HBP molecules. Such intramolecular reactions, i.e. reactions within a single HBP molecule, may be controlled by the varying the concentrations of reactants. Performing the crosslinking process at high concentrations of HBP molecules may favor the crosslinking process between HBP molecules, as the chance of an intermolecular reaction between HBP molecules and a crosslinker molecule will increase. Performing the reaction at dilute concentrations using a high amount of solvent will increase the occurrence of the intramolecular reactions, as the chance of intermolecular reactions between HBP molecules, of which one already has reacted with a crosslinking molecule is reduced, and an intramolecular crosslink may be favored. It is therefore preferred to do the crosslinking step at high concentrations of the HBP, using little solvent, as this may be favorable for efficient crosslinking. As HBPs may be very well dissolvable, the use of a HBP in particular may allow to select for such conditions. In contrast, other polymers, e.g. linear (co)polymers are much less soluble, thus reactions are carried out in less favorable conditions with regard to intermolecular crosslinking, when such polymers are crosslinked, intramolecular crosslinks may more often be formed.

Properties of HBPs, such as high solubility, low solution and melt viscosities and/or high number of reactive groups per molecule, thus may allow for an easy and efficient crosslinking step that can result in dense concentrations of ion exchange groups in the crosslinked HBP with ion exchange groups. Not much solvent may be needed to dissolve large quantities of HBP, the solution can still have low viscosity which may make it easily to handle. The crosslinking step may run smoothly and to high conversions, first in solution when there may be a high concentration in reactive groups, and after the solvent has evaporated in the bulk, viscosities can remain relatively low enhancing the diffusion of reactants.

The crosslinker or the HBP may comprise an ion exchange group, such that when the HBP and crosslinker are reacted a crosslinked HBP with ion exchange groups is formed. A HBP may have reactive groups that are ion exchange groups such as e.g. carboxylate or sulfonate groups, which groups may be converted to amide or sulfonamide linkages by reaction with amine groups in a crosslinker. In the preparation of the crosslinked HBP with ion exchange groups, a portion of the carboxylate or sulfonate ion exchange groups of the HBP is not reacted with the crosslinker, so that a portion of the carboxylate or sulfonate ion exchange groups is retained. This way, a crosslinked HBP with ion exchange groups may be formed.

As long as a crosslinker and a HBP have complementary reactive groups, i.e. they can react with each other forming crosslinks, such a crosslinker and HBP may be used. Thus, the complementary reactive groups in the crosslinker and the HBP may be any combination of two reactive groups that effectively leads to a covalent bond formation between the two crosslinker and HBP. For example, one may have alcohol reactive groups, while the other may have carboxylic acid, carboxylic (activated) ester or anhydride reactive groups to enable the formation of ester linkages; the other may also have isocyanate reactive groups thus forming urethane linkages; the other may also have halide, tosylate, mesylate or triflate reactive groups thus forming ether linkages. Furthermore, one may comprise primary amine or secondary amine reactive groups, while the other may have isocyanate reactive groups (to form urea linkages), carboxylic acid, carboxylic (activated) ester or (cyclic) anhydride reactive groups (to form amide linkages), ethylenenically monounsaturated reactive groups such as (meth)acrylates, (meth)acryl amides or vinyl derived groups (to form amine linkages in Michael-type of additions), epoxide reactive groups (to form an amine alcohol linkage), sulfonate of activated sulfonate reactive groups (to form sulfon amide linkages), or halide, tosylate, mesylate or triflate reactive groups (to form secondary or tertiary amine linkages). Alternatively, one may comprise tertiary amine, pyridine or tertiary phosphine reactive groups, while the other may have halide, tosylate, mesylate or triflate reactive groups, upon crosslinking, quarternary ammonium, pyridinium or quarternary phosphonium crosslinkes may be formed.

Accordingly, examples of crosslinkers are diamines, dihalides, ditosylates, dimesylates, diols, dicarboxylic acids, di-activated esters, di-vinyl compounds, dianhydrides, particularly di cyclic anhydrides, di-isocyanates and di-epoxides. Crosslinkers that may be preferred are di-cyclic anhydrides, diamines, dipyridines and dihalides, more preferred may be diamines and dihalides, most preferred may be dihalides. For amine groups in the crosslinker, either primary or secondary amines can be used, which are reactive towards e.g. carboxylic acids and its derivatives or towards sulfonates and its derivatives. Tertiary amines can also be used and are preferred as these can generate ion exchange groups upon reaction with e.g. halides. In case halides are used, the more reactive halides are preferred, such as activated halides (e.g. benzyl chlorides), bromides and iodides. Crosslinker molecules are for example di-cyclic anhydrides such as pyromellitic dianhydride, EDTA-dianhydride, DTPA-dianhydride, benzophenone-3,3',4,4'-tetracarboxylic dianhydride, di primary amines such as diaminobutane and diaminohexane, di secondary amines such as piperazine and N,N'-dimethyl alkanediamines, di tertiary amines such as tetramethyl alkanediamines, dipyridines such as 4,4'-bipyridine, dihalides such as 1,6-diiodohexane, 1,6-dibromohexane, 1,10-dibromodecane. According to the present invention, in the method for preparing the crosslinked hyperbranched (co)polymer with ion exchange groups, an ion exchange group is formed during the crosslinking step. According to the present invention the ion exchange group formed during crosslinking is an anion exchange group, wherein the reactive group of the hyperbranched (co)polymer is a tertiary amine, a pyridine, a guanidine and/or a phosphine group and the reactive group of the crosslinker is a halide, tosylate, mesylate or triflate group; the reactive groups of the hyperbranched (co)polymer react with the reactive groups of the crosslinker forming a covalent bond and a quarternary ammonium, pyridinium, guanidinium or phosphonium anion exchange group is formed. In addition the HBP and/or the crosslinker may already comprise ion exchange groups. With comprising ion exchange groups according to the invention it is meant that the ion exchange groups are covalently bound to the HBP, crosslinker and/or crosslinked HBP.

In a further embodiment, the crosslinker and/or hyperbranched (co)polymer may comprise hydrophilic groups and hydrophobic groups. Providing such groups may affect the reaction conditions (e.g. solvents, reaction kinetics) during the crosslinking step and/or the properties of the crosslinked hyperbranched (co)polymer with ion exchange groups.

### The ion exchange groups

The ion exchange groups may be dissociable depending on the pH, but are preferably not pH-dependent, i.e. they do not change their charge upon pH-changes. Alternatively, the ion exchange groups may not be pH-dependent over a broad pH-range, for example from pH 5 to 9, preferably from 3 to 11, more preferably from 2 to 12, most preferably from 1 to 13 or even beyond. Ion exchange groups may either be anion exchange groups or cation exchange groups.

Anion exchange groups are positively charged and may be based on nitrogen or phosphor atoms that preferably do not bear any hydrogen atoms. Examples of anion exchange groups are quaternary ammonium charges (NR₄), quaternary phosphonium charges (PR₄), guanidinium charges, pyridinium charges or charges formed from nitrogen containing heterocycles other than pyridine, such as for example imidazoles, triazoles or oxazoles. Most preferred are quaternary ammonium or pyridinium charges. The so-called strongly basic ion exchange groups (e.g. quaternary ammonium groups) are preferred over weakly basic groups (e.g. secondary or tertiary amines). The cation exchange groups are negatively charged and may be based on sulfur, phosphor, boron or carbon atoms. Examples are sulfonate (R-SO3⁻), phosphonate (R-PO₃²⁻), boronate (R-BO₂²⁻) or carboxylate (R-COO⁻) charges, wherein R may represent the crosslinker and/or HBP, or the crosslinked hyperbranched (co)polymer. Preferred negatively charged groups are sulfonate groups. In addition, so-called strongly acidic ion exchange groups (e.g. sulfonate groups) are preferred over weakly acidic groups (e.g. carboxylate groups). According to the present invention the crosslinked (co)hyperbranched polymer comprises quarternary ammonium, pyridinium, guanidinium or phosphonium anion exchange group, formed during the crosslinking step between the reactive groups of the crosslinker and the reactive groups of the hyperbranched polymer, wherein the reactive group of the hyperbranched (co)polymer is a tertiary amine, a pyridine, a guanidine and/or a phosphine group and the reactive group of the crosslinker is a halide, tosylate, mesylate or triflate group.

### The preparation of the hyperbranched (co)polymer

HBPs may be prepared by various methods known in the art and are usually prepared by step-growth methods or by chain-growth methods. In a typical step-growth method an ABₓ branching monomer is polycondensed (dependent on the availability of suitable monomers; usually x=2, where x represents the number of functional groups B in the monomer), where the functional groups A react with B, and not with other A groups. The B groups do also not react with each other, and have an equal or similar reactivity towards A. Side reactions are prevented or are insignificant. The result is a HBP with a high functionality in B-groups. A lot of variations and modifications of a step-growth method are possible, and have been developed. For example, in addition to the ABₓ monomer, a multifunctional B_{y} monomer (where y represents the number of functional groups B in the monomer), an AB monomer, or a monomer with only one A-group may be used. In other frequently used methods, the multifunctional monomers A₂ and B_{y} are combined to produce an HBP material. Here, in principle, crosslinking may occur, but by controlling the conversion of the polymerization, undesired gelation may be prevented. Another way to circumvent crosslinking in the reaction between A₂ and B_{y} monomers is that one of the B-groups has a much higher reactivity towards the A-group (and therefore is in fact a C-group), so that an ABₓ monomer is formed in-situ. Step-growth methods have also been described by the way in which the branching monomer is used or applied (see Gao and Yan, Prog.Polym.Sci., 29, 2004), discriminating between single monomer methodologies (SMM), double monomer methodologies (DMM) and couple-monomer methodologies (CMM), where in the latter case the ABₓ branching monomer is formed in situ.

Step-growth methods are usually polycondensation reactions, leading to polyesters, polyamides, polycarbonates, polyureas, polyurethanes, polyethers or polyarylenes), but Michael-type of additions, i.e. additions where a primary or secondary amine adds to a double bond (leading to polyamines), or additions of alcohols to isocyanates (leading to polyurethanes) are also possible.

Chain growth methods that may also be used to prepare HBPs are radical addition polymerization reactions, ring opening reactions, or anionic or cationic (living) polymerizations. The radical addition polymerizations may be free radical polymerizations, or controlled radical polymerizations that are known in the art, such as nitroxide-mediated radical polymerization (NMRP), atom-transfer radical polymerization (ATRP) or reversible addition-fragmentation chain transfer polymerizations (RAFT). Other controlled chain-growth processes that may be used are group-transfer polymerizations, ruthenium-catalyzed co-ordinative polymerizations or ring opening metathesis polymerzations (ROMP).

A chain-growth method to prepare HBPs may be according to the so-called self-condensing vinyl polymerization (SCVP), wherein an AB* branching monomer, in which A is a vinylic group that is capable of chain-growth vinyl-polymerization and B* is a group that potentially generates initiating sites for this vinyl-polymerization, providing the third direction in which the polymer chain may grow. The AB* branching monomer may be combined with an A monomer, so that not every monomeric unit is a potential branching unit. Similarly, in the self-condensing ring-opening polymerization (SCROP), that is also called ring-opening multibranching polymerization (ROMBP), an AB* monomer is used, where A is a heterocyclic ring capable of ring-opening polymerization, and B* is an initiating group for this ring opening polymerization. The AB* monomer may be combined with a cyclic A monomer, so that not every monomeric unit is a potential branching unit. Glycidol is an example of an AB* monomer that is suitable for use in SCROP (or ROMBP).

According to the above, chain growth methods may involve the use of either vinylic monomers (leading to poly-vinyl type of polymers) and/or cyclic monomers (typically leading to polyethers or polyesters). Vinylic monomers can be (meth)acrylates, (meth)acryl amides, vinyl ethers, vinyl esters or vinyl aryl monomers. Combinations of these type of vinyl monomers may be suitable as well. Examples of cyclic monomers are epoxides, oxetanes, caprolactones or urethanes.

### Preparing a HBP by an addition polymerization reaction according to the present invention

The methods for preparation of HBPs described above are methods describing general ways to prepare HBPs, and are not limited thereto. It may be of interest to provide for a versatile method in which the HBP is synthesized in one synthetic step, after which the HBP can be used for the preparation of the crosslinked HBP with ion exchange groups, without having to do resort to post-modification reaction step(s) on the HBP. According to the present invention the hyperbranched (co)polymer is prepared by a method, comprising the steps of:
- providing one or more branching monomer(s),
- providing one or more co-monomers,
- providing an initiator, preferably a free radical initiator,
- optionally, providing a chain transfer agent, and
- reacting the branching monomer(s), the optional co-monomer(s), the initiator and the optional chain transfer reactant to form a hyperbranched (co)polymer.
According to the present invention the method involves an addition polymerization reaction and, preferably, a free-radical polymerization reaction. In this method, the chemistry of the reactants (i.e. branching monomor, co-monomer, initiator, and/or chain transfer agent) and the reaction conditions may be selected such that crosslinking reactions may be prevented between HBP molecules that are being formed during the reacting step (i.e. preventing gelation or solidification). According to the present invention the branching monomer comprises at least two vinyl groups, and wherein the co-monomer comprises one vinyl, where the vinyl groups are suitable for addition polymerization. The HBP thus prepared is a methacrylate based HBP or an acrylamide based HBP.

The preparation methods and reactants (e.g. branching monomer, co-monomer, initiator and/or chain transfer agent) described below are versatile in the sense that the HBP can be prepared from readily available monomers and reactants, and that it can be tailored with respect to its properties by simply varying the used amounts of the branching monomer, the co-monomer(s), the initiator and the chain transfer agent. The extent of branching of the hyperbranched (co)polymer may be controlled by adjusting the amount of branching monomer in the polymerization reaction, while the use of.the types and amounts of co-monomers may determine the type and amount of ion exchange groups and/or reactive groups in the HBP. Care may be taken to select a ratio between the chain transfer agent and the branching monomer such that gelation is prevented during the polymerization reaction, while still generating a HBP of a substantial molecular weight, e.g. with HBP molecules with a number average molecular weight (Mn) in the range of 250 Dalton to 100.000 Dalton (see for example O'Brien, Polymer, 41, 2000, 6027-6031). All branched monomers, co-monomers, initiators and/or chain transfer agents may comprise groups, or may transfer groups, such that the HBP formed may comprise these groups.

In one embodiment of the invention, the molar ratios of co-monomer(s) : branching monomer(s) : chain transfer agent (CTA) is between 5-80 : 0.5-20 : 1-30. The molar ratio of co-monomer(s) : branching monomer(s) may also be lower than 100:1, preferably lower than 16:1, more preferably lower than 11:1, most preferably lower than 7:1. The molar ratio between the branching monomer(s) and the chain transfer agent is preferably between 1:15 and 2:1.

When co-monomers are combined, for instance to provide for different chemistries in the HBP, e.g. see example Reaction scheme 1 wherein 4-VP provides for a pyridine and HEMA/MMA provides for hydrophilic groups, one co-monomer may have a high reactivity with the CTA. Because of this high reactivity, a side product may be formed when the CTA and this co-monomer react. When this is the case, more of the CTA and more the this co-monomer may be used to compensate for the loss of reactants in the side product. For example, the co-monomer 4-vinyl pyridine can form readily a thioether side product with a linear primary thiol CTA. For instance, the amounts of CTA and/or co-monomer may be increased in the reaction mixture, whereas the amount of CTA and/or co-monomer incorporated is similar (see Table 1 and Table 2, compare e.g. 12A with 21).

In the reaction mixture, the amount of co-monomer(s) used is preferably in the range of 40 mol/mol% to 98 mol/mol%, the amount of branching monomer(s) and/or CTA is preferably from 2 mol/mol% to 50 mol/mol%. The initiator can be used in amounts varying from 0.01 mol/mol% to about 5 mol/mol%, relative to the amount of co-monomer(s), branching monomer(s) and CTA reactants. When higher molar percentages of initiator are used, the application of inhibitor additives or retarding agents (e.g. benzoyliminoacetate) may be considered. However, inhibitors or retardants may be avoided when about 1 mol/mol% of initiator is used, .

The radical polymerization reaction may be performed using reaction conditions known to the skilled person, selecting a solvent (e.g. toluene or ethanol), concentration of reactants and monomers (i.e. solids), temperature and addition method of monomers, reactants and/or solvent as are known in the art for polymerization reactions. Preferably, the reaction is performed in alcohols such as ethanol, with concentrations ranging between 3 w/w % and 30 w/w % in solids, more preferably between 10 w/w % and 25 w/w %" at temperatures between 60°C-90 °C,. Preferably, all monomers, reactants and solvents are premixed before the start of the reaction. Prior to a radical polymerization, the reaction mixture is preferably freed of oxygen, for example by purging it with an inert gas such as nitrogen.

The HBP may next be isolated. The HBP may for instance be isolated by precipitation or stirring in a non-solvent for the HBP. For this purpose the solvent in which the reaction was carried out may first be evaporated, prior to addition of the non-solvent. In the precipitation step by-products or less-preferred product fractions of low molecular weight may be removed.

Alternatively, the reaction mixture comprising the HBP may also be directly used for the crosslinking reaction, forming a crosslinked HBP with ion exchange groups.

### The branching monomer

According to the present invention the branching monomer is a molecule comprising at least two vinyl groups (i.e. an ethylenenically diunsaturated monomer). The branching monomer may also comprise more than two vinyl groups. These vinyl groups polymerize in an addition polymerization reaction. Many of such molecules are readily available, or may be prepared by reacting any di- or multifunctional molecule with a suitably reactive vinylic reactant. Examples include di- or multivinyl esters, di- or multivinyl amides, di- or multivinyl aryl compounds (including those with heterocyclic aryl groups), and di- or multivinyl alkyl/aryl ethers. The branching monomer may be hydrophilic or hydrophobic (but hydrophobic polysiloxane chains may be less preferred); The branching monomer can be either uncharged or negatively or positively charged. The branching monomer may be a single molecule, an oligomeric molecule or a polymeric molecule. The branching monomer may also comprise a mixture of different branching monomers. compound. The molecular weight of a branching monomer may be lower than 950 Dalton. The branching monomer may preferably be uncharged, and preferably a single compound.

Branching monomers include, but are not limited thereto, divinyl aryl monomers such as divinyl benzene; (meth)acrylate diesters such as alkylene di(meth)acrylates such as ethylene glycol di(meth)acrylate, propylene glycol di(meth)acrylate, 1,4-butylene glycol di(meth)acrylate; oligo alkylene glycol di(meth)acrylates such as e.g. tetraethyleneglycol di(meth)acrylate, poly(ethyleneglycol) di(meth)acrylate, poly (propyleneglycol) di(meth)acrylate; divinyl (meth)acrylamides such as methylene bisacrylamide; divinyl ethers such as poly(ethyleneglycol)divinyl ether; and tetra- or tri-(meth)acrylate esters such as pentaerythritol tetra (meth) acrylate, trimethylolpropane tri(meth)acrylate or glucose di- to penta (meth)acrylate. Preferred branching monomers may be divinyl benzene, α,ω-alkylene di(meth)acrylates or divinyl (meth)acrylamides, most preferred may be α,ω-alkylene di(meth)acrylates such as ethylene glycol di(meth)acrylate and 1,4-butylene glycol di(meth)acrylate or divinyl (meth)acrylamides, such as methylene bisacrylamide.

In another embodiment, the branching monomer is a di(meth)acrylate, or a bisacrylamide, more preferably 1,4-butanediol dimethacrylate or methylene bisacrylamide.

### The co-monomers

The co-monomer may comprise any carbon-carbon unsaturated compound that can be polymerized in an addition polymerization reaction. Preferably when a co-monomer is to be polymerized in an addition polymerization reaction, it can be an ethylenenically monounsaturated monomer, e.g. vinyl or allyl compounds. Many of such molecules are readily available. Examples of co-monomers are vinyl acids, vinyl acid esters, vinyl aryl compounds (including those with heterocyclic aryl groups), vinyl acid anhydrides, vinyl amides, vinyl ethers, vinyl amines, vinyl aryl amines, vinyl nitriles, vinyl ketones, vinyl aldehydes, terminal alkylenes, and derivatives of these monomers as well as corresponding allyl variants thereof. The co-monomer can be hydrophilic or hydrophobic (but hydrophobic polysiloxane chains may be less preferred); anionic, cationic, uncharged or zwitterionic; it can be a single molecule, oligomeric or polymeric molecule. Preferably the molecular weight is lower than 950 Dalton. The co-monomer can be uncharged, negatively, or positively charged. A co-monomer may also comprise a mixture of different co-monomers, which may add flexibility, as the HBP may comprise a variety of different co-monomers with different chemistries. A single co-monomer may be preferred however.

Vinyl acids and derivatives thereof include (meth)acrylic acid and acid halides or activated esters thereof such as (meth)acryloyl chloride or N-hydroxysuccinamido (meth)acrylate, itaconic acid, maleic acid, vinyl phosphonic acid or vinyl phosphonates, vinylsulfonic acid or vinylsulfonates. Vinyl acid esters and derivatives thereof include linear or branched C1-20 alkyl(meth)acrylates such as methyl (meth)acrylate, stearyl (meth)acrylate and 2-ethyl hexyl (meth)acrylate, (metha)crylates with alcohol and/or ether groups such as 2-hydroxyethyl (meth)acrylate, 3-hydroxypropyl (meth)acrylate, glycidyl (meth)acrylates and (meth)acrylic acid esters of (monomethoxy)glycols, (meth)acrylates with tertiary amine groups such as dimethylaminoethyl (meth)acrylate, diethylaminoethyl (meth)acrylate, diisopropylaminoethyl (meth)acrylate, mono-tert-butylaminoethyl (meth)acrylate, di(m)ethylaminopropyl (meth)acrylate and morpholinoethyl(meth)acrylate, (meth)acrylates with quarternary ammonium groups such as 2-(meth)acryloyloxy)ethyl-trimethylammonium chloride, (meth)acrylates with sulfonate or sulfonic acid groups such as 3-sulfopropyl (meth)acrylate salts, aryl(meth)acrylates such as benzyl (meth)acrylate, tri(alkyloxy)silylalkylene(meth)acrylates such as trimethoxysilylpropyl(meth)acrylate. Vinyl aryl compounds and derivatives thereof include styrene, acetoxystyrene, styrene sulfonic acid, styrene sulfonates, vinyl pyridines such as 4-vinyl pyridine, vinylbenzyl chloride, vinyl benzoic acid and (vinylbenzyl)trimethylammonium chloride. Vinyl acid anhydrides and derivatives thereof include maleic anhydride (a cyclic anhydride). Vinyl amides and derivatives thereof include (meth)acrylamide, N-isopropyl (meth)acrylamide, N-(2-hydroxypropyl)methacrylamide, N-vinyl pyrrolidone, N-vinylformamide, maleimide derivatives, methyl (meth)acrylamidoglycolate methyl ether, vinyl amides with tertiary amine groups such as *N*-[3-(dimethylamino)propyl]methacrylamide, vinyl amides with carboxylic acid or carboxylate groups, vinyl amides with quarternary ammonium groups such as 3-(metha)acrylamidopropyl-trimethylammonium chloride, vinyl amides with sulfonate groups such as 2-(meth)acrylamido-2-methyl-1-propanesulfonates, 2-(meth)acrylamido 2-ethyl propanesulfonates and 3-[N-(3-(meth)acrylamidopropyl)-N,N-dimethyl-aminopropane] sulfonates. Vinyl ethers and derivatives thereof include methyl vinyl ether and vinyl acetate. Vinyl aryl amines and derivatives thereof include vinyl aniline, vinyl pyridines, N-vinyl carbazole, vinyl imidazoles, vinyl triazoles and vinyl oxazoles. Vinyl nitriles and derivatives thereof include (meth)acrylonitrile. Vinyl aldehydes and derivatives thereof include acreolin.

It is possible to apply more than one co-monomer, as this provides the opportunity to incorporate ion-exchange groups and/or reactive groups into the HBP, while it also provides versatility to tailor the properties of the HBP. Indeed, co-monomers may be preferred that provide the HBP with cations, i.e. anion exchange groups, with anions (i.e. cation exchange groups), with reactive groups and/or with hydrophilic or hydrophobic groups. Hydrophilic co-monomers may for example have alcohol groups, e.g. a co-monomer may be 2-hydroxyethyl (metha)crylate. Hydrophobic co-monomers are for example styrene or 2-ethylhexyl (meth)acrylate. According to the present invention one or more of the co-monomers comprise one vinyl group, wherein the vinyl group is suitable for addition polymerization and wherein one or more of the co-monomers comprise a tertiary amine, a pyridine, a guanidine, and/or phosphine group as a precursor of the anion exchange group. In a particular embodiment of the present invention amine groups, particularly tertiary amine groups or pyridine groups, are rendered quaternary ammonium or pyridinium anion exchange groups, respectively, upon quaternization with the reactive group of the crosslinker e.g. halides or tosylates. Examples of co-monomers are (meth)acrylates, (meth)acryl amides or vinyl aryl compounds that bear quaternary ammonium, tertiary amine, pyridine, cyclic anhydride, alkyl or benzyl halide, sulfonate or carboxylate groups. Non-limiting examples are 2-(meth)acryloyloxy)ethyl-trimethylammonium chloride, (vinylbenzyl)trimethylammonium chloride, 3-(metha)acrylamidopropyl-trimethylammonium chloride, di(m)ethylaminoethyl (meth)acrylates, di(m)ethylaminopropyl (meth)acrylates, *N*-3-(dimethylamino)-propyl methacrylamide, vinyl pyridine, maleic anhydride, vinylbenzyl chloride, 3-sulfopropyl (meth)acrylate salts, styrene sulfonates, 2-(meth)acrylamido-2-methyl-1-propanesulfonates, 2-(meth)acrylamido 2-ethyl propanesulfonates, (meth)acrylic acid and vinyl benzoic acid. 2-(meth)acryloyloxy)ethyl-trimethylammonium chloride, 3-(metha)acrylamidopropyl-trimethylammonium chloride, di-(methylamino)ethyl (meth)acrylates, 4-vinyl pyridine, styrene sulfonates and 2-(meth)acrylamido-2-methyl-1-propanesulfonates may be preferred, with more preference for di(methylamino)ethyl (meth)acrylates and 4-vinyl pyridine.

In one embodiment of the present invention, the co-monomer is a vinylpyridine, (meth)acrylate, or an acrylamide, preferably the the co-monomer is 4-vinylpyridine, 2-hydroxyethylamethacrylate, methylmethacrylate, (dimethylamino)ethyl methacrylate, or N-isopropylacrylamide.

### The initiator and the chain transfer agent

The initiator is a molecule that can initiate a polymerization reaction. In case the polymerization reaction is a (free)-radical polymerization reaction, the initiator may be a (free)-radical initiator which may be any molecule known to initiate such a reaction, such as e.g. azo-containing molecules, peroxides, persulfates, redox initiators, benzyl ketones. Such initiators may be activated via thermal, photolytic or chemical means. Examples of (free)-radical initiators are 2,2'-azobisisobutyronitrile (AIBN), azobis(4-cyanovaleric acid), benzoyl peroxide, cumylperoxide, 1-hydroxycyclohexyl phenyl ketone and hydrogenperoxide/ascorbic acid. The so-called iniferters may also be considered as initiators. AIBN may be preferred as (free)-radical initiator.

The chain transfer agent or reactant is a molecule that can control, limit and reduce the molecular weight during radical or free-radical polymerization via a chain transfer mechanism, as is known in the art. For example, a chain transfer agent in a radical polymerization reaction can react with the group of the polymer comprising the radical, such that the radical is transferred to the chain transfer agent. The result is that the chain transfer agent comprises the radical, and the polymerization of the group of the polymer that previously comprised the radical has stopped. The use of a chain transfer agent may prevent that the polymerization reaction will results in crosslinking reactions and gel formation. The chain transfer agent in a radical polymerization reaction may be any thiol-containing molecule and can be mono- or multifunctional. Examples of suitable thiols are linear or branched C2-C18 alkyl thiols such as dodecane 1-thiol, thioglycolic acid, thioglycerol, cysteine and cysteamine, 2-mercaptoethanol, thioglycerol, dithiothreitol (DTT) and ethylene glycol mono- (and di-)thio glycollate. Thiols may in addition bear reactive and/or ion exhange groups, such as carboxylic acids, amines or alcohols. Apart from thiols, other agents that can stabilize a radical and/or that are known to limit the molecular weight in a free-radical addition polymerization may also be considered. For example, hindered alcohols, organic complexes of cobalt are known as chain transfer catalysts, such as bis(borondifluorodimethyl-glyoximate) (CoBF) or cobalt oximes, reversible addition fragmentation transfer (RAFT) agents such as xanthates, dithioesters and dithiocarbonates, or alkyl halides. A preferred chain transfer agent is a thiol, preferably an organic thiol, more preferably an organic linear or branched C6-C20 alkyl thiol.

### An ion exchange membrane comprising the crosslinked HBP with ion exchange groups

According to the present invention a crosslinked hyperbranched (co)polymer with ion exchange groups obtained by the methods as described herein may be provided. Such a crosslinked hyperbranched (co)polymer with ion exchange groups may be in the form of a sheet. The invention also provides for an ion exchange membrane comprising the crosslinked hyperbranched (co)polymer containing ion exchange groups, prepared according to the method of the present invention, that preferably is prepared as a sheet. The crosslinked HBP may have gel like or solid like properties. The crosslinking reaction may be performed in a coating or a film, such that a sheet of crosslinked HBP is formed. The reactive film may be prepared by any processing technique feasible, such as for example by spraying a solution that contains both the HBP and the crosslinker onto a surface, or by applying such a solution onto a substrate by any coating technique, e.g. by a so-called dr. Blading technique. The crosslinking reaction may be performed directly onto the surface or substrate of choice, for example onto a specific support layer or onto an electrode. Alternatively, the crosslinking reaction may also be performed to prepare small sphere-like shaped crosslinked HBP particles (e.g. microspheres), for example by performing the crosslinking in small droplets, which may be used to prepare e.g. a paste, such that the crosslinked HBP may be applied to irregular surfaces or shapes.

The crosslinking step may also at first instance be done in a reactor, and may subsequently be transferred to the object, substrate or surface of choice, where the reaction may be completed. Since during the crosslinking step the viscosity of the reaction mixture may increase, due to the crosslinks that are formed, the properties of the reaction mixture may change from a liquid to a more viscous, paste like mixture which may make it convenient to apply the reaction mixture to a surface, or a mold, which may even have an irregular surface. Hence, it may be advantageous to transfer the reaction mixture during the reaction to an object, substrate or surface of choice, where the reaction will be completed.

In another aspect of the invention, an ion exchange membrane is provided which comprises sheets of crosslinked HBP with ion exchange groups, wherein the thickness of the sheets of crosslinked HBP with ion exchange groups is preferably less than 200 micrometer, more preferably less than 100 micrometer, and most preferably less than 60 micrometer.

The concentration of the ion exchange groups, either cationic or anionic, in the crosslinked HBP with ion exchange groups is preferably higher than 0.2 mmol per gram, preferably higher than 0.8 mmol per gram, more preferably higher than 1.4 mmol per gram, even more preferably 2.0 mmol per gram and most preferably higher than 2.5 mmol per gram. These numbers refer to a dry crosslinked HBP with ion exchange groups. Preferably, the crosslinked HBP with ion exchange groups comprises between 25% and 95%, more preferably, between 40% and 85%, and most preferably between 55% and 80% by weight of the HBP. The concentrations of ion exchange groups in mmol/g of dry crosslinked HBP with ion exchange groups, and percentages by weight of HBP in the dry crosslinked HBP with ion exchange groups may e.g. be calculated from the amounts of HBP and crosslinker that have been used in the preparation of the crosslinked HBP membrane material.

Furthermore, the crosslinked HBP with ion exchange groups material may comprise additional hydrophilic groups, such as for example alcohol or amide groups, and/or additional hydrophobic groups, such as for example C₈ or higher alkyl or alkylene groups, where these hydrophilic and/or hydrophobic groups may originate from the crosslinker and/or from the HBP. In this way, the crosslinked hyperbranched (co)polymer with ion exchange groups may be more compatible with water and/or may improve the electrical conductive properties of the crosslinked hyperbranched (co)polymer with ion exchange groups and/or may improve the performance of the membrane material.

The (sheets of) crosslinked HBP with ion exchange groups, that may be used for ion exchange membranes, may have little or no curling or delamination when after preparation they are brought in contact with water and also at the same time may show little swelling. Furthermore, advantageous permselectivities may be obtained with crosslinked HBP with ion exchange groups. As is described in the examples, for instance, permselectivities higher than 90% may be obtained with sheets in the range of 40 micrometer (see example 17). Permselectivity or permeability selectivity, is defined as the percentage of cations or anions, of the total amount of ions that may be taken up by a membrane, in this case a membrane comprising the crosslinked HBP with ion exchange groups. When a membrane has a permselectivity of 100% for anions, this means that 100% of the ions may be taken up by the membrane are anions. When the permselectivity is reduced e.g. by 5% to a permselectivity of 95%, this means that 95% of the ions that may be are taken up by the membrane are anions, and 5% are cations. Please note that for ion exchange membranes, especially for those applied in FTCs, every percent increase in permselectivity may be very valuable, with 100% being the maximum selectivity achievable. Also, a low resistances as low as 5 ohm*cm2, or even as low as 1.5 ohm*cm2 have been recorded for the prepared sheets of crosslinked HBP with ion exchange groups in example 17.

Accordingly, the invention further provides the use of a crosslinked hyperbranched (co)polymer with ion exchange groups according to the invention, an ion exchange membrane according to the invention, or an apparatus according to the invention, for the removal of ions from water.

These and other aspects, features and advantages will become apparent to those of ordinary skill in the art from reading the description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" or "x-y" are understood to include x and y. When for a specific feature multiple preferred ranges are described in the format "from x to y", it is understood that all ranges combining the different endpoints are also contemplated.

### Examples

### Experimental details

All solvents were of AR quality if not stated otherwise and were purchased from commercial sources (Biosolve or Acros). Deuterated solvents were purchased from Cambridge Isotope Laboratories and were dried over molsieves. The co-monomers 4-vinyl pyridine (4-VP) (95%), 2-hydroxyethyl methacrylate (HEMA) (97%), methyl methacrylate (MMA) (99%), 2-(dimethylamino)ethyl methacrylate (DAMA) (98%), 3-(dimethylamino)propyl methacrylamide (DAPMA), N-(2-hydroxyethyl)-acrylamide (HEAA), the crosslinker 1,10-dibromodecane and the branching monomers methylenebisacrylamide (MBAA) (98%) and butanediol dimethacrylate (di-MA) (95%), were purchased from Aldrich. The chain transfer agent 1-dodecane thiol (99%), the co-monomer *N*-isopropylacrylamide (IAA) (99%), the initiator 2,2'-azo-bis(2-methylpropionitrile) (AIBN) (98%) and the crosslinker 1,6-diiodohexane (97%) were purchased from Acros. ¹H-NMR spectra were recorded on a Varian Mercury Plus 200 MHz NMR spectrometer, where ¹H-NMR chemical shifts are given in ppm, and were determined using tetramethylsilane (TMS) as internal standard (0 ppm). Infrared spectra of samples were recorded on a Perkin Elmer Spectrum One 1600 ATR FT-IR spectrometer. Wavenumbers are given in cm⁻¹. GPC (or SEC) chromatograms of the polymers were measured using 10 mM of LiBr in DMF as eluent, applying a 1 mL/min eluent flowrate, a sample concentration of 2 mg/mL in 10 mM of LiBr DMF and an injection volume of 20 microL. A Polymer Laboratories PL-GPC50 Plus Integrated GPC system was used, equipped with a Polymer Standards Service (PSS) Gram analytical linear M column (dimensions 8 × 300 mm, particle-size 10 micro-m, mass range: 500-1000000 Da) that was operated at 50 °C and applying refractive index (RI) detection. Calibration was performed with polyethyleneoxide reference standards. Elemental analysis was performed on a Perkin Elmer 2400 machine, where elemental contents are given in weight percentages. DSC was performed on a TA Q2000 instrument, where monitored samples are kept under a nitrogen atmosphere. Glass transition temperatures (Tg) are given as observed during the second heating run using a heating rate of 40 °C/min.

The below examples serve to show some possibilities of the invention, and are non-limiting to the invention.

### The preparation of the HBP copolymers

Hyperbranched copolymers were synthesized in addition co-polymerization reactions. Methacrylate based HBPs with pyridine groups or with tertiary amine groups were prepared (see Scheme 1 and Scheme 2), as well as (meth)acrylamide based HBPs with pyridine groups or with tertiary amine groups (see Scheme 3 and Scheme 4). The shown monomers may be combined in other ways as well, e.g. in Schemes 3 and 4 the di-ester braching monomer di-MA (from Schemes 1 and 2) may be applied in stead of the bisacrylamide MBAA.

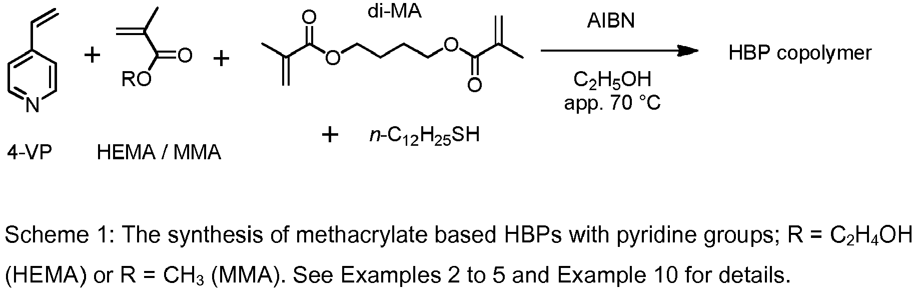

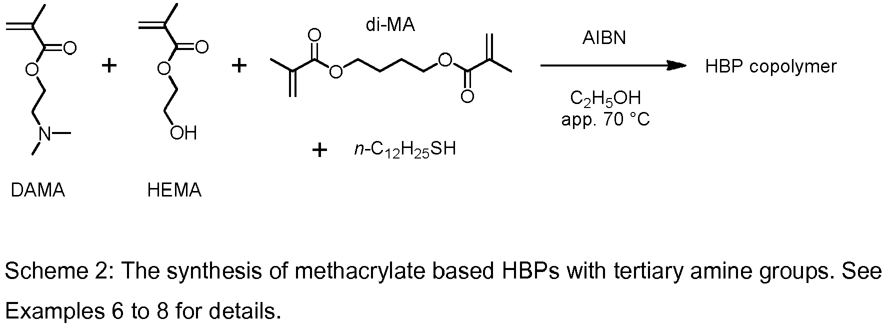

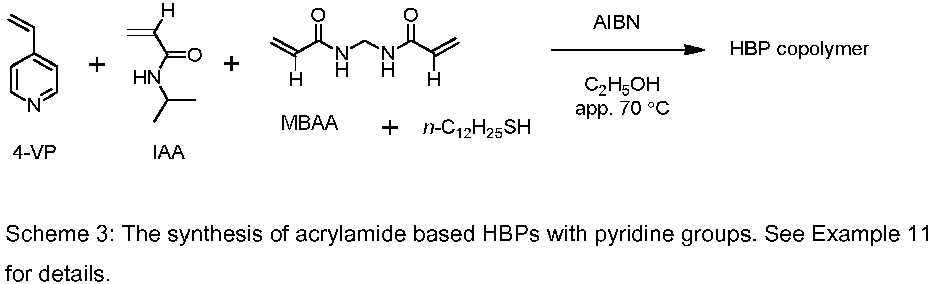

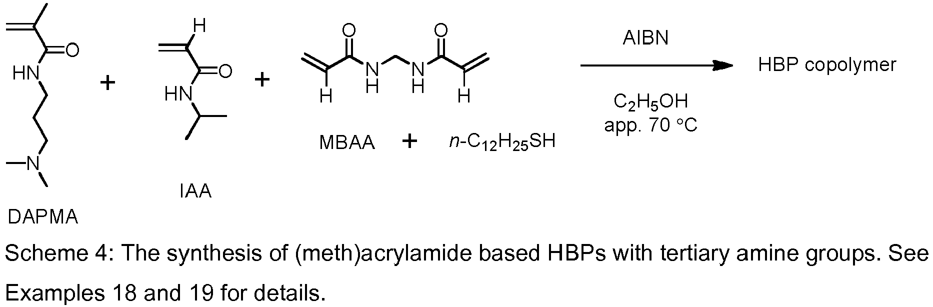

For the methacrylate based HBPs (Scheme 1 and Scheme 2), 1,4-butanediol dimethacrylate (di-MA) was selected as the branching monomer, while for the (meth)acrylamide based HBPs (Scheme 3 and Scheme 4) methylene bisacrylamide (MBAA) was chosen.

All polymerization reactions were reproducible. Similar reaction conditions were selected for all polymerizations, using ethanol as solvent, 1-dodecanethiol as chain transfer agent, applying approximately 1 mole-% of AIBN-initiator with respect to the total moles of vinylic groups, and employing a reaction temperature of approximately 70 °C. The conversion during reaction was monitored with ¹H-NMR.

When 4-vinyl pyridine (4-VP) was used as a co-monomer (Scheme 1 and Scheme 3), the formation of a side-product was observed. This thioether side-product was formed by the reaction of 4-vinyl pyridine with dodecane thiol, see also: A.R. Katritzky et al., J. Org. Chem., 1986, 51, 4914. Purification of the polymerization reaction mixture was performed by precipitation in heptane, thus effectively removing side-products.

When methylene bisacrylamide (MBAA) was used as co-monomer (particularly Scheme 4), some thioether side-product was formed as well, in this case by reaction of methylene bisacrylamide (MBAA) with two equivalents of dodecane thiol leading to formation of the corresponding dithioether.

When only methacrylate monomers were used (Scheme 2), a thioether side-product was not observed, which may result in higher yields of HBP. Additionally, as reactivities of the methacrylate monomers are similar, a more random incorporation of monomers in these HBPs may be expected.

Generally, dimethyl amino tertiary amines are considered more nucleophilic than pyridines. Accordingly, using co-monomers with tertiary amines, for example the applied DAMA or DAPMA monomers (Scheme 2 and Scheme 4), in stead of applying the vinyl pyridine co-monomer (Schemes 1 and 3), may result in HBPs that are more reactive towards alkane dihalides in the crosslinking-quarternization step.

The (meth)acrylamide based hyperbranched copolymers (Scheme 3 and Scheme 4) may be polymerized without the use of a hydrophilic co-monomer such as HEMA, as the amides provide hydrophilicity already. Amide based HBPs may be of interest as they may be more stable towards hydrolysis, as compared to the methacrylate based HBPs.

Finally, the isolated HBPs as described below did not show signs of degradation upon routine storage at room temperature or at 4 °C, and were thus regarded stable.

Please note that the linear copolymers and the HBPs in the examples below are indicated with a number as this makes it more convenient to refer to the different polymers that have been synthesized.

### Comparative Example 1: linear copolymer 10B

4-Vinyl pyridine (7.91 g, 71.43 mmol), 2-hydroxyethyl methacrylate (3.57 ml, 28.57 mmol), *n-*dodecane thiol (10.33 ml, 42.86 mmol) and AIBN (167 mg, 1 mmol) were dissolved in ethanol (67 ml) in a 3-neck 250 ml round-bottom flask under stirring. The beige, clear solution was purged with argon for 1 h while stirring. A reflux condenser was fitted and the reaction mixture was then stirred and heated at an oil bath temperature of 75 °C for 15 h, and was kept under an argon atmosphere. The solvent was evaporated *in vacuo* and the orange residual syrup redissolved into ethanol (15 ml) and subsequently precipitated into an ice-cold mixture of heptane (200 ml) and diisopropyl ether (100 ml) during which a beige slurry formed. The slurry was filtered over a glass filter and the residue was washed twice with an ice-cold mixture of heptane (33 ml) and diisopropyl ether (17 ml). Overnight drying of the residue in vacuum yielded the reference linear copolymer **10B** as a light-yellow solid (7.19 g, 36 %). ¹H-NMR (CDCl₃ and CD₃OD) δ = 8.42 (pyridine, broad peak (bp)), 7.08 (pyridine, bp), 4.08 (ester, bp), 3.78 (ester/alcohol, bp), 3.53 (ester/alcohol, bp), 2.5-0.4 (multiple signals, bp), 1.25 (alkyl tail CH₂-groups), 0.88 ppm (triplet (t), ³*J*(H,H) = 6.3 Hz, alkyl tail CH₃-group). FT-IR (ATR): *v* (cm⁻¹) = 3233, 2925, 2854, 1721, 1598, 1558, 1454, 1417, 1386, 1220, 1183, 1145, 1083, 1070, 1026, 1003, 994, 897, 820, 755; GPC (DMF-LiBr): Mn = 0.2 kg/mol, Mw = 0.3 kg/mol, PDI = 1.7; Elemental analysis: C 67.23, H 7.88, N 5.58. Number of pyridine groups as derived from ¹H NMR data: 4.2 mol/kg linear copolymer. T_{g} = 39 °C.

### Example 2: HBP 8C

4-Vinyl pyridine (9.65 g, 87.2 mmol), 2-hydroxyethyl methacrylate (3.63 ml, 29.1 mmol), 1,4-butanediol dimethacrylate (0.68 ml, 2.9 mmol), n-dodecane thiol (10.51 ml, 43.6 mmol) and AIBN (209 mg, 1.25 mmol) were dissolved in ethanol (125 ml) in a 3-neck 250 ml round-bottom flask under stirring. The beige, clear solution was purged with argon for 1 h while stirring. A reflux condenser was fitted and the reaction mixture was stirred and heated at an oil bath temperature of 76 °C for 17 h, and was kept under argon. The solvent was evaporated *in vacuo* and the orange residual syrup redissolved into ethanol (20 ml) and subsequently precipitated into ice-cold heptane (350 ml) during which an orange-beige mass formed. The supernatant was decanted and the residue was dried overnight in vacuum to yield HBP **8C** as a yellow, glassy solid (7.47 g, 33 %). ¹H-NMR (CDCl₃ and CD₃OD) δ = 8.45 (pyridine, bp), 7.02 (pyridine, bp), 4.04 (ester, bp), 3.78 (ester/alcohol, bp), 3.52 (ester/alcohol, bp), 2.5-0.4 (multiple signals, bp), 1.25 (alkyl tail CH₂), 0.88 ppm (t, ³*J*(H,H) = 6.4 Hz, alkyl tail CH₃). FT-IR (ATR): *v* (cm⁻¹) = 3233, 2925, 2854, 1721, 1598, 1558, 1454, 1417, 1386, 1220, 1183, 1145, 1083, 1070, 1026, 1003, 994, 897, 820, 755; GPC (DMF-LiBr): Mn = 1.1 kg/mol, Mw = 4.2 kg/mol, PDI = 3.7; Elemental analysis: C 68.84, H 7.85, N 6.30. Number of pyridine groups, as derived from ¹H NMR data: 4.7 mol/kg HBP. T_{g} = 57 °C.

### Example 3: HBP 12B

4-Vinyl pyridine (7.91 g, 71.43 mmol), 2-hydroxyethyl methacrylate (2.18 ml, 17.42 mmol), 1,4-butanediol dimethacrylate (1.33 ml, 5.71 mmol), n-dodecane thiol (10.33 ml, 42.86 mmol) and AlBN (167 mg, 1 mmol) were dissolved in ethanol (67 ml) in a 3-neck 250 ml round-bottom flask under stirring. The beige, clear solution was purged with argon for 1 h while stirring. A reflux condenser was fitted and the reaction mixture was stirred and heated at an oil bath temperature of 75 °C for 18 h, and was kept under an argon atmosphere. The solvent was evaporated *in vacuo* and the orange residual syrup redissolved into ethanol (15 ml) and subsequently precipitated into heptane (400 ml) during which a beige mass formed. The supernatant was decanted and the residue was redissolved into ethanol (20 ml) and precipitated into heptane (400 ml) during which a beige mass formed. The supernatant was decanted and the residue was dried overnight in vacuum to yield HBP **12B** as a beige, glassy solid (6.44 g, 33 %). ¹H-NMR (CDCl₃): δ = 8.46 (pyridine, bp), 6.98 (pyridine, bp), 4.01 (ester, bp), 3.83 (ester/alcohol, bp), 3.6 (ester/alcohol, broad shoulder), 2.5-0.4 (multiple signals, bp), 1.25 (alkyl tail CH₂), 0.88 ppm (t, ³*J*(H,H) = 6.1 Hz, alkyl tail CH₃). FT-IR (ATR): *v* (cm⁻¹) = 3249, 3025, 2924, 2853, 1721, 1598, 1558, 1452, 1416, 1386, 1220, 1176, 1085, 1070, 1026, 993, 820, 755; GPC (DMF-LiBr): Mn = 1.8 kg/mol, Mw = 3.8 kg/mol, PDI = 2.1; Elemental analysis: C 68.14, H 7.95, N 5.64. Number of pyridine groups as derived from ¹H NMR data: 4.1 mol/kg HBP. T_{g} = 66 °C.

### Example 4: HBP 10A

4-Vinyl pyridine (7.91 g, 71.43 mmol), 2-hydroxyethyl methacrylate (1.43 ml, 11.43 mmol), 1,4-butanediol dimethacrylate (2.00 ml, 8.57 mmol), n-dodecane thiol (10.33 ml, 42.86 mmol) and AlBN (167 mg, 1 mmol) were dissolved in ethanol (67 ml) in a 3-neck 250 ml round-bottom flask under stirring. The beige, clear solution was purged with argon for 1 h while stirring. A reflux condenser was fitted and the reaction mixture was stirred and heated in an oil bath temperature of 75 °C for 15 h, while keeping the mixture under an argon atmosphere. The solvent was evaporated *in vacuo* and the orange residual syrup redissolved into ethanol (15 ml) and subsequently precipitated into an ice-cold mixture of heptane (200 ml) and diisopropyl ether (100 ml) during which a beige slurry formed. The slurry was filtered over a glass filter and the residue was washed twice with an ice-cold mixture of heptane (33 ml) and diisopropyl ether (17 ml). Overnight drying of the residue in vacuum yielded HBP **10A** as a light-yellow, glassy solid (8.44 g, 43 %). ¹H-NMR (CDCl₃): δ = 8.47 (pyridine, bp), 6.98 (pyridine, bp), 4.08 (ester, bp), 3.85 (ester/alcohol, bp), 3,6 (ester/alcohol, broad schoulder), 2.5-0.4 (multiple signals, bp), 1.25 (alkyl tail CH₂), 0.88 ppm (t, ³*J*(H,H) = 6.3 Hz, alkyl tail CH₃). FT-IR (ATR): *v* (cm⁻¹) = 3262, 3024, 2924, 2853, 1721, 1598, 1558, 1466, 1452, 1416, 1385, 1219, 1171, 1087, 1069, 1028, 993, 957, 819, 755; GPC (DMF-LiBr): Mn = 1.1 kg/mol, Mw = 3.6 kg/mol, PDI = 3.4; Elemental analysis: C 69.77, H 8.20, N 5.47. Number of pyridine groups as derived from ¹H NMR data: 4.1 mol/kg HBP. T_{g} = 30 °C.

### Example 5: HBP 12A

4-Vinyl pyridine (7.91 g, 71.43 mmol), 2-hydroxyethyl methacrylate (0.76 ml, 5.71 mmol), 1,4-butanediol dimethacrylate (2.67 ml, 11.43 mmol), *n*-dodecane thiol (10.33 ml, 42.86 mmol) and AlBN (167 mg, 1 mmol) were dissolved in ethanol (67 ml) in a 3-neck 250 ml round-bottom flask under stirring. The beige, clear solution was purged with argon for 1 h while stirring. A reflux condenser was fitted and the reaction mixture was stirred and heated at an oil bath temperature of 75 °C for 18 h, whilst under an argon atmosphere. The solvent was evaporated *in vacuo* and the orange residual syrup redissolved into ethanol (15 ml) and subsequently precipitated into heptane (300 ml) during which a beige mass formed. The supernatant was decanted and the residue was redissolved into ethanol (20 ml) and again precipitated into heptane (400 ml) during which a beige mass formed. The supernatant was decanted and the residue was dried in vacuum for 48 hrs to yield HBP **12A** as a beige, glassy solid (6.30 g, 32 %). ¹H-NMR (CDCl₃): δ = 8.48 (pyridine, bp), 6.99 (pyridine, bp), 4.07 (ester, bp), 3.84 (ester/alcohol, bp), 3.55 (ester/alcohol, bp), 2.5-0.4 (multiple signals, bp), 1.26 (alkyl tail CH₂), 0.90 ppm (t, ³*J*(H,H) = 6.1 Hz, alkyl tail CH₃). FT-IR (ATR): *v* (cm⁻¹) = 3255, 2925, 2854, 1721, 1597, 1558, 1451, 1415, 1385, 1219, 1167, 1069, 1028, 993, 819, 754; GPC (DMF-LiBr): Mn = 3.1 kg/mol, Mw = 7.5 kg/mol, PDI = 2.4; Elemental analysis: C 69.99, H 8.02, N 5.63. Number of pyridine groups as derived from ¹H NMR data: 4.1 mol/kg HBP.T_{g}=71°C.

### Example 6: HBP 21

2-(Dimethylamino)ethyl methacrylate (9.56 g, 59.5 mmol), 2-hydroxyethyl methacrylate (2.25 ml, 17.9 mmol), 1,4-butanediol dimethacrylate (2.65 ml, 11.3 mmol), dodecane thiol (4.30 ml, 17.9 mmol) and AIBN (167 mg 1.0 mmol) were dissolved in ethanol (67 ml) in a 3-neck 100 ml round-bottom flask under stirring. The colorless, clear solution was purged with argon for 1 h while stirring. A reflux condenser was fitted and the reaction mixture was heated at an oil bath temperature of 73 °C under argon and stirring for 19 h. The solvent was evaporated *in vacuo* and the orange residual syrup was mixed with heptane (100 ml) and heated at 70 °C for 2 h to give a beige emulsion. The latter was allowed to reach room temperature during which phase separation occurred into a beige viscous bottom layer and a clear, dark-yellow liquid top layer. This layer was decanted after which the residue was dried for two days in vacuum in the presence of KOH as drying agent to yield HBP **21** as a sticky, dark-yellow solid (12.57 g, 70 %). ¹H-NMR (CDCl₃): δ = 4.08 (ester, bp), 3.82 (alcohol, bp), 2.5-0.6 (multiple bp), 2.57 (amine CH₂, bp), 2.28 (amine CH₃, s), 1.25 (alkyl tail CH₂), 0.88 ppm (alkyl tail CH₃); FT-IR (ATR): *v* (cm⁻¹) = 2927, 2855, 2823, 2771, 1724, 1456, 1388, 1270, 1238, 1147, 1099, 1063, 1019, 964, 853, 778, 749; GPC (DMF-LiBr): Mn = 3.5 kg/mol, Mw = 13.4 kg/mol, PDI = 3.9; Elemental analysis: C 61.52, H 9.31, N 4.16. Number of amine groups as derived from ¹H NMR data: 3.6 mol/kg HBP. T_{g} = 1 °C.

### Example 7: HBP 19

2-(Dimethylamino)ethyl methacrylate (5.74 g, 35.7 mmol), 2-hydroxyethyl methacrylate (0.63 ml, 5.0 mmol), 1,4-butanediol dimethacrylate (2.25 ml, 9.64 mmol), dodecane thiol (2.60 ml, 10.7 mmol) and AIBN (100 mg 0.6 mmol) were dissolved in ethanol (40 ml) in a 3-neck 100 ml round-bottom flask under stirring. The colorless, clear solution was purged with argon for 1 h while stirring. A reflux condenser was fitted and the reaction mixture was heated at an oil bath temperature of 73 °C under argon and stirring for 21 h. The solvent was evaporated *in vacuo* and the orange residual syrup was mixed with heptane (300 ml) and refluxed for 2 h to give a beige emulsion. The latter was allowed to settle overnight resulting in a dark-yellow bottom layer and a clear, dark-yellow, liquid top layer. This layer was decanted after which the residue was dried for two days in vaccuum in the presence of KOH as drying agent to yield HBP **19** as a sticky, yellow solid (6.30 g, 59 %). ¹H-NMR (CDCl₃): δ = 4.07 (ester, bp), 3.81 (alcohol, bp), 2.5-0.6 (multiple bp), 1.25 (alkyl tail CH₂), 0.88 ppm (alkyl tail CH₃); FT-IR (ATR): *v* (cm⁻¹) = 2926, 2854, 2822, 2770, 1724, 1456, 1387, 1268, 1236, 1145, 1100, 1062, 1040, 1019, 964, 852, 778, 749; GPC (DMF-LiBr): Mn = 4.7 kg/mol, Mw = 17.1 kg/mol, PDI = 3.7; Elemental analysis: C 62.33, H 9.38, N 3.99. Number of amine groups as derived from ¹H NMR data: 3.9 mol/kg HBP. T_{g} = 9 °C.

### Example 8: HBP 20

2-(Dimethylamino)ethyl methacrylate (9.55 g, 59.5 mmol), 1,4-butanediol dimethacrylate (4.75 ml, 20.2 mmol), dodecane thiol (4.30 ml, 17.9 mmol) and AlBN (167 mg 1.0 mmol) were dissolved in ethanol (67 ml) in a 3-neck 250 ml round-bottom flask under stirring. The colorless, clear solution was purged with argon for 1 hr while stirring. A reflux condenser was fitted and the reaction mixture was heated at an oil bath temperature of 73 °C under argon and stirring for 19 h. The solvent was evaporated *in vacuo* and the orange residual syrup was mixed with acetonitrile (50 ml) and heated at 80 °C for 1 h under stirring to give an orange-beige emulsion. After allowing to reach room temperature the mixture separated into a beige, viscous bottom layer and an almost clear, orange top layer. The latter was decanted after which the residue was dried for two days in vacuum in the presence of KOH as drying agent to yield HBP **20** as a sticky, yellow solid (12.35 g, 70 %). ¹H-NMR (CDCl₃): δ = 4.08 (ester, bp), 2.5-0.6 (multiple bp), 1.26 (alkyl tail CH₂), 0.88 ppm (t, ³*J*(H,H) = 6.2 Hz, alkyl tail CH₃); FT-IR (ATR): *v* (cm⁻¹) = 2925, 2854, 2822, 2770, 1724, 1456, 1387, 1268, 1236, 1146, 1100, 1062, 1041, 1019, 956, 853, 778, 750; GPC (DMF-LiBr): Mn = 6.8 kg/mol, Mw = 71.9 kg/mol, PDI = 10.6; Elemental analysis: C 63.72, H 9.57, N 3.89. Number of amine groups as derived from ¹H NMR data: 2.9 mol/kg HBP. T_{g} = not determined.

### Comparative Example 9: linear copolymer 22A

4-Vinyl pyridine (11.88 g, 107.1 mmol), methyl methacrylate (4.65 ml, 42.9 mmol), dodecane thiol (15.5 ml, 64.3 mmol) and AIBN (249 mg, 1.5 mmol) were dissolved in ethanol (100 ml) in a 3-neck 250 ml round-bottom flask under stirring. The beige, clear solution was purged with argon for 1 h while stirring. A reflux condenser was fitted and the reaction mixture was heated at an oil bath temperature of 70 °C under argon and stirring for 16 h. The solvent was evaporated *in vacuo* and the orange residual syrup mixed with heptane (100 ml). This mixture was heated to reflux under stirring to give a beige emulsion. After 0.5 h, the emulsion was allowed to reach room temperature during which time the orange material settled and an orange, clear supernatant formed. The latter was decanted and the residue was mixed with heptane (100 ml) and subsequently heated to 80 °C. Stirring of the viscous mixture was performed for 10 minutes after which the mixture was allowed to reach room temperature. An almost colorless, turbid supernatant formed which was decanted and the beige residue was collected, dried under vacuum at room temperature and subsequently mixed with pentane (100 ml) to give a beige suspension upon grinding and stirring. The suspension was allowed to settle, so that a supernatant formed that was then decanted. The residue was collected and dried under vacuum at room temperature in the presence of KOH to give linear copolymer **22A** as a beige powder (7.85 g, 27 %). ¹H-NMR (CDCl₃): δ = 8.46 (pyridine, bp), 6.87 (pyridine, bp), 3.54, 3.35 and 2.91 (ester/alcohol, bp), 2.5-0.4 (multiple bp), 1.24 (alkyl tail CH₂), 0.86 ppm (t, ³*J*(H,H) = 6.1 Hz, alkyl tail CH₃); FT-IR (ATR): *v* (cm⁻¹) = 3423, 3024, 2988, 2925, 2853, 1725, 1597, 1557, 1448, 1416, 1358, 1219, 1196, 1134, 1069, 993, 820, 754; GPC (DMF-LiBr): Mn = 0.7 kg/mol, Mw = 1.5 kg/mol, PDI = 2.1; Elemental analysis: C 71.74, H 7.79, N 7.46. Number of pyridine groups as derived from ¹H NMR data: 5.5 mol/kg linear copolymer. T_{g} = 41 °C.

### Example 10: HBP 22B

4-Vinyl pyridine (11.86 g, 107.1 mmol), methyl methacrylate (0.90 ml, 8.6 mmol), 1,4-butanediol dimethacrylate (4.0 ml, 17.1 mmol), dodecane thiol (15.50 ml, 64.3 mmol) and AIBN (251 mg, 1.5 mmol) were dissolved in ethanol (100 ml) in a 3-neck 250 ml round-bottom flask under stirring. The beige, clear solution was purged with argon for 1 h while stirring. A reflux condenser was fitted and the reaction mixture was heated at an oil bath temperature of 70 °C under argon and stirring for 21 h. The solvent was evaporated *in vacuo* and the orange residual syrup mixed with heptane (100 ml). This mixture was heated to 80 °C under stirring to give a beige emulsion. After 0.5 h, the emulsion was allowed to reach room temperature during which time the material settled and an orange, clear supernatant formed. The latter was decanted and the dark-yellow residue was mixed with heptane (100 ml) and subsequently heated to 80 °C. Manual stirring of the viscous mixture was performed for 10 minutes after which the mixture was allowed to reach room temperature. An almost colorless, turbid supernatant formed which was decanted and the dark-yellow residue was collected and dried to remove the ethanol used. The residue was suspended in pentane (100 ml) under grinding and stirring for 1 h and the beige suspension was allowed to settle for 1 h. The formed supernatant was decanted and the residue washed with pentane (25 ml) and decanted again. Drying of the residue under vacuum in the presence of KOH gave HBP **22B** as a beige powder (5.51 g, 19 %). ¹H-NMR (CDCl₃): δ = 8.47 (pyridine, bp), 6.96 (pyridine, bp), 4.02 and 3.60 (ester/alcohol, bp), 2.5-0.4 (multiple bp), 1.25 (alkyl tail CH₂), 0.88 ppm (t, ³*J*(H,H) = 6.2 Hz, alkyl tail CH₃); FT-IR (ATR): *v* (cm⁻¹) = 3423, 3025, 2924, 2853, 1722, 1597, 1557, 1495, 1465, 1457, 1415, 1386, 1219, 1169, 1132, 1069, 1032, 993, 973, 819, 754; GPC (DMF-LiBr): Mn = 2.8 kg/mol, Mw = 7.4 kg/mol, PDI = 2.7; Elemental analysis: C 71.28, H 8.11, N 5.69. Number of pyridine groups as derived from ¹H NMR data: 4.9 mol/kg HBP. T_{g} = 54 °C.

### Example 11: HBP 23

4-Vinyl pyridine (11.88 g, 107.1 mmol), *N*-isopropyl acrylamide (1.97 g, 17.1 mmol), methylene bisacrylamide (2.02 g, 12.7 mmol), dodecane thiol (15.50 ml, 64.3 mmol) and AIBN (252 mg, 1.5 mmol) were dissolved in ethanol (100 ml) in a 3-neck 250 ml round-bottom flask under stirring. The beige, foggy solution was purged with argon for 1 h while stirring. A reflux condenser was fitted and the reaction mixture was heated at an oil bath temperature of 73 °C under argon and stirring upon which the reaction mixture turned clear. The reaction mixture was heated and stirred for 21 h. The solvent was evaporated *in vacuo* and the orange residual syrup was mixed with heptane (100 ml). This mixture was heated to 80 °C under stirring to give a beige suspension. After 1 h, the suspension was allowed to reach room temperature and filtered over a Büchner funnel giving a beige residue that was washed with heptane (3 × 25 ml). The residue was subsequently suspended in acetonitrile (50 ml) and heated to 80 °C. After 0.5 h stirring, the mixture was allowed to reach room temperature and settled overnight. A residue and an orange, clear supernatant appeared and the latter was decanted. The residue was mixed with acetonitrile (50 ml) under grinding and stirring giving a beige suspension, that was filtered over a Buchner funnel giving a beige residue that was washed with acetonitrile (2 × 25 ml) and dried in a vacuum oven at 30 °C in the presence of KOH for two days giving HBP **23** as a beige powder (6.15 g, 22 %). ¹H-NMR (CDCl₃ and CD₃OD) δ = 8.41 (pyridine, bp), 6.99 (pyridine, bp), 4.50 (CH₂ bisacrylamide, bp), 3.94 (CH *N*-isopropylacrylamide, bp), 2.5-0.4 (multiple bp), 1.25 (alkyl tail CH₂), 0.88 ppm (t, ³*J*(H,H) = 6.2 Hz, alkyl tail CH₃); FT-IR (ATR): *v* (cm⁻¹) = 3287, 3025, 2925, 2854, 1665, 1598, 1526, 1456, 1416, 1385, 1367, 1220, 1175, 1116, 1070, 994, 821; GPC (DMF-LiBr): Mn = 1.3 kg/mol, Mw = 3.9 kg/mol, PDI = 3.0; Elemental analysis: C 66.96, H 8.16, N 11.52. Number of pyridine groups as derived from ¹H NMR data: 4.8 mol/kg HBP. T_{g} = 134 °C.

### Example 12: Compositional data of the HBPs

The relative molar amounts of the branching monomers, co-monomers and reactants have been used in the polymerization reactions from Example 1 to Example 11 have been compiled in Table 1 below. Compositional data from the corresponding isolated HBPs have been compiled in Table 2, where these data have been derived or estimated from ¹H NMR spectral data, as far as this was feasible. See Schemes 1 to 3 for explanations of the 4-VP, DAMA, HEMA, MMA, IAA, MBAA and di-MA codes for the monomers. Note that 1 mole of di-MA or MBAA branching monomer contains 2 moles of vinylic groups; (L) denotes linear reference copolymers.

**Table 1: Applied compositions of the reaction mixtures used in Examples 1 to 11**

| Example Entry | HBP | Molar ratio of reactants | | | | | | | |
|---|---|---|---|---|---|---|---|---|---|
| | | 4-VP | HEMA | MMA | DAMA | IAA | di-MA | MBAA | C12-thiol |
| **1** | **10B** (L) | 25 | 10 | | | | 0 | | 15 |
| **2** | **8C** | 30 | 10 | | | | 1 | | 15 |
| **3** | **12B** | 25 | 6 | | | | 2 | | 15 |
| **4** | **10A** | 25 | 4 | | | | 3 | | 15 |
| **5** | **12A** | 25 | 2 | | | | 4 | | 15 |
| **6** | **21** | | 3 | | 10 | | 1.9 | | 3 |
| **7** | **19** | | 1.4 | | 10 | | 2.7 | | 3 |
| **8** | **20** | | 0 | | 10 | | 3.4 | | 3 |
| **9** | **22A** (L) | 25 | | 10 | | | 0 | | 15 |
| **10** | **22B** | 25 | | 2 | | | 4 | | 15 |
| **11** | **23** | 25 | | | | 4 | | 3 | 15 |

In the series of experiments, on going from entry 1 to 5, from entry 6 to 8 and from entry 9 to 10, in the polymerization reaction mixture, the content of di-vinylic branching monomer increases and whereas the content of mono-vinylic co-monomers decreases. Preparation of HBPs with tertiary amine groups requires less of the C12-thiol chain transfer agent and less of co-monomers (Entries 6 to 8). Entries 1 and 9 represent the linear and non-branched reference copolymers.

**Table 2: Compositional data of the isolated HBPs**

| Example Entry | HBP | Molar ratio of the monomeric units in the HBP | | | | | | | |
|---|---|---|---|---|---|---|---|---|---|
| | | 4-VP | HEMA | MMA | DAMA | IAA | di-MA | MBAA | C12-thiol |
| **1** | **10B (L)** | 10 | 6.7 | | | | 0.0 | | 2.1 |
| **2** | **8C** | 10 | 4.5 | | | | 0.4 | | 1.9 |
| **3** | **12B** | 10 | 4.6 | | | | 1.5 | | 2.2 |
| **4** | **10A** | 10 | 2.3 | | | | 1.8 | | 3.5 |
| **5** | **12A** | 10 | 1.4 | | | | 2.7 | | 2.9 |
| **6** | **21** | | 3 | | 10 | | 1.9 | | 2.0 |
| **7** | **19** | | 1.4 | | 10 | | 2.7 | | 1.1 |
| **8** | **20** | | 0 | | 10 | | 3.4 | | 5.5 |
| **9** | **22A (L)** | 10 | | 4.8 | | | 0 | | 1.4 |
| **10** | **22B** | 10 | | 0.7 | | | 1.3 | | 3.2 |
| **11** | **23** | 10 | | | | 1.8 | | 1.4 | 3.4 |

| | | | | | | | | | |
|---|---|---|---|---|---|---|---|---|---|
| Note: The ratios HEMA/di-MA (for Entries 1 to 8) and MMA/di-MA (for Entries 9 and 10) can not be derived from the ¹H NMR-data. The represented data reflect the ratio that is used in the reaction mixture. | | | | | | | | | |

### Example 13: Properties of the HBPs

Some molecular and material properties of the synthesized HBPs have been listed in Table 3. All prepared HBPs have contents of pyridine or amine groups that are in a similar range, varying somewhat from 3 to 6 mmol/g. The molecular weights of the HBPs, as well as the polydispersity index (PDI) seem to correlate with the used amount of branching monomer (Entries 1 to 5, 6 to 8, and 9 to 10). This is especially apparent for the tertiary amine containing HBP-copolymers (Entries 6 to 8), possibly because in these cases the materials have been prepared in high-yielding reactions that may not suffer from side reactions (i.e. no significant thio-ether formation). The glass transition temperature (Tg) of the tertiary amine containing HBPs (Entries 6 to 8) is lower than those for the pyridine containing HBPs (Entries 2 to 5, and Entry 10), while the acrylamide based HBP (Entry 11) exhibits the highest Tg-value.

**Table 3: Compiled properties of the prepared HBPs.**

| Example Entry | HBP | pyridine or amine content | Mn | Mw | PDI | Tg |
|---|---|---|---|---|---|---|
| | | mmol/g | kg/mol | kg/mol | (-) | °C |
| **1** | **10B** (L) | 4.2 / 4.0* | 0.2 | 0.3 | 1.7 | 39 |
| **2** | **8C** | 4.7 / 4.5* | 1.1 | 4.2 | 3.7 | 57 |
| **3** | **12B** | 4.1 / 4.0* | 1.8 | 3.8 | 2.1 | 66 |
| **4** | **10A** | 4.1 / 3.9* | 1.1 | 3.6 | 3.4 | 30 |
| **5** | **12A** | 4.1 / 4.0* | 3.1 | 7.5 | 2.4 | 71 |
| **6** | **21** | 3.6 / 3.0* | 3.5 | 13.4 | 3.9 | 1 |
| **7** | **19** | 3.9 / 2.8* | 4.7 | 17.1 | 3.7 | 9 |
| **8** | **20** | 2.9 / 2.8* | 6.8 | 71.9 | 10.6 | n.o. |
| **9** | **22A** (L) | 5.5 / 5.3* | 0.7 | 1.5 | 2.1 | 41 |
| **10** | **22B** | 4.9 / 4.1* | 2.8 | 7.4 | 2.7 | 54 |
| **11** | **23** | 4.7 | 1.3 | 3.9 | 3.0 | 134 |

| | | | | | | |
|---|---|---|---|---|---|---|
| Pyridine or amine contents were derived from ¹H NMR spectral data, and were also recorded by elemental analyses (the data indicated with an *); Mn = number average molecular weight, Mw = weight average molecular weight, PDI = Mw/Mn = polydispersity index, all three determined by GPC; Tg = glass transition temperature as determined by DSC; n.o. = not observed, but the material is somewhat sticky, so the Tg should be ca. 0 to 10 °C. | | | | | | |

### Example 14: The solubility of the HBPs

The solution properties of the HBPs are exemplified in experiments that compare the HBP **10A** with the reference linear copolymer **10B.** Both are well soluble in ethanol up to concentrations of at least 1 g material per ml of solvent, but the viscosity of a solution of the linear copolymer **10B** in ethanol is higher than that of a **10A** solution in ethanol at the same concentration by weight. The HBP **10A** is soluble in a variety of solvents other than alcohols, such as chloroform and THF, whereas the linear copolymer **10B** is not, or has only very limited solubility in these solvents. The solubility experiments indicate that HBPs provide for a broader range of processing conditions (choice of solvent, high concentrations) can be used and tested in the production of crosslinked HBP with ion exchange groups. The HBPs that possess tertiary amine groups **19, 20** and **21** are well-soluble in ethanol, while these materials are also properly soluble in chloroform, methanol, THF and DMF. The acrylamide based HBP **23** displays similar solubility as HBPs **19, 20** and **21.**

### Inventive Example 15: Crosslinking

HBP **12A** (0.1 g, 0.41 mmol pyridine groups) was dissolved in 0.1 ml ethanol under stirring for at least 0.5 h to yield a yellow, homogeneous and clear solution. Subsequently, 17 microliter (0.10 mmol, 0.25 molar equivalent, thus 0.50 molar equivalents of iodo reactive groups) of 1,6-di-iodohexane was added. The mixture was stirred for 15 min., and then a droplet of the homogeneous mixture was placed on a glass slide and the solvent was allowed to evaporate for 1 h. After leaving the film at room temperature for two days, FT-IR spectroscopy indicated a ca. 50% conversion of the pyridine reactive groups into pyridinium anion exchange groups by quaternization with the iodo reactive groups, as the intensities of the peaks at ca. 1639 cm⁻¹ (indicative of pyridinium groups) and at ca. 1599 cm⁻¹ (indicative of pyridine groups) were about equal. In the starting HBP **12A** only the resonance at ca. 1599 cm⁻¹ is visible (strong resonance signal). Because only 0.50 molar equivalents of iodo groups were applied, this indicates a high, almost complete crosslinking. Assuming full conversion of the iodo groups in the crosslinking, a density of approximately 1.5 mmol pyridinium anion exchange groups per gram of dry crosslinked HBP material can be calculated. The quarternization reaction may be achieved more quickly by heating of the dried-in droplet at 50 °C for 8 hrs. After the crosslinking, the quarternization reaction, the droplet had transformed into a tough, non-sticky material. FT-IR (ATR): *v* (cm-1) = 3416, 2925, 2854, 1718, 1639, 1599, 1559, 1515, 1468, 1416, 1383, 1218, 1169, 1070, 1031, 994, 967,822,757.

### Example 16: Preparation of a sheet of crosslinked HBP with anion exchange groups

A small bottle (volume ca. 40 ml) was filled with ca. 2 to 5 ml of ethanol and 1.0 to 2.0 g of HBP copolymer (or reference linear copolymer) was added, divided over 3 to 5 approximately equal portions. A magnetic stirrer was added to the bottle that was sealed with a lid, and the solution was stirred gently for at least 12 hours until a homogeneous and clear solution was obtained, indicating that the HBP had fully dissolved. Then 0.5 to 0.7 g of the 1,6-diiodohexane crosslinker was added to the HBP solution and the solution was again gently stirred, now for 6 minutes. The solution thus had a solid content of about 35% to 45% by weight. A sample of 1.5 ml was taken from the bottle with a syringe and was coated onto a polyethylene support (Solupor 7P03A, Lydall Solutech B.V.), using a Zehntner™ ZAA2300 film applicator. The coated film was left to cure for at least a full day, which resulted in a sheet with a thickness in the range of circa 40 micrometer. The following amounts were used for the preparation of sheets of the respective crosslinked linear copolymer with ion exchange groups and crosslinked HBP with ion exchange group; ethanol (g), linear copolymer or HBP (g), and 1,6-diiodohexane crosslinker (g) for linear **10B:** 4.82, 1.92, 0.63 grams and 2.40, 1.00, 0.74 grams; for HBP **8C:** 4.91, 1.88, 0.60 grams and 2.41, 1.00, 0.72 grams; for HBP **12B**: 4.92, 1.95, 0.59 grams and 2.41, 1.01, 0.71 grams; for HBP **10A:** 4.86, 1.83, 0.68 and 2.40, 1.09, 0.71 grams; for HBP **12A:** 4.85, 1.96, 0.55 grams and 2.40, 1.04, 0.74 grams. Thus, for every crosslinked HBP (or linear copolymer) with ion exchange groups, two sheets were prepared, one with an IEC density of ca. 1.5 mmol/g and one with an IEC density of ca. 2.5 mmol/g (in mmol pyridinium groups per gram of dry crosslinked material, assuming a maximum conversion of the reactive groups).

### Example 17: The performance of the sheets of the crosslinked HBP with ion exchange groups

Anion exchange membranes comprising sheets of crosslinked linear copolymers and crosslinked HBP copolymers with pyridinium groups (i.e. ion exchange groups), as prepared in Example 16 were tested for their selectivity, resistance and thickness; see Table 4 for the results. Membrane characterization was done according to standard methods, which is described in more detail in Dlugolecki, P. et al Journal of Membrane Science 319 (2008) 214-222

**Table 4: Properties of anion exchange membranes comprising crosslinked linear copolymers or crosslinked HBP-copolymers, both with pyridinium exchange groups.**

| Entry | HBP-copolymer | DB of HBP-copolymer | IEC (meq/g) | Permselectivity (%) | Resistance (Ω·cm²) |
|---|---|---|---|---|---|
| **1** | **10B (L)** | zero | 1.5 | 85.2 | 2.35 |
| **2₍₊₎** | **8C** | lowest | 1.4 | 88.0 | 3.31 |
| **3₍₊₎** | **12B** | medium | 1.4 | 90.7 | 4.64 |
| **4₍₊₎** | **10A** | high | 1.6 | 90.3 | 2.73 |
| **5₍₊₎** | **12A** | highest | 1.3 | 92.1 | 6.03 |
| **6** | **10B (L)** | zero | 2.5 | 88.6 | 1.06 |
| **7₍₊₎** | **8C** | lowest | 2.5 | 90.4 | n.d. |
| **8₍₊₎** | **12B** | medium | 2.4 | 90.9 | 2.05 |
| **9₍₊₎** | **10A** | high | 2.3 | 91.7 | 1.25 |
| **10₍₊₎** | **12A** | highest | 2.5 | 92.3 | 3.02 |

| | | | | | |
|---|---|---|---|---|---|
| * The thickness of all membrane films was circa 40 microns; n.d. = not determined. (+) Examples according to the invention. | | | | | |

The above data indicate that HBP copolymers are more suitable for preparation of ion exchange membranes than linear copolymers, as higher permselectivities are attained. Electrial resistances for all materials are relatively low.

### Example 18: HBP 35B

3-(Dimethylamino)propyl methacrylamide (DAPMA, 15.19 g, 88.3 mmol), *N*-isopropyl acrylamide (IAA, 3.02 g, 26.4 mmol), *N*,*N'*-methylene bisacrylamide (MBAA, 2.78 g, 17.7 mmol), dodecane thiol (6.5 ml, 27.0 mmol) and AIBN (252 mg, 1.51 mmol) were mixed in ethanol (50 ml) in a 2-neck 100 ml round-bottom flask. The white suspension was purged with argon for 1 h under stirring. A reflux condenser was fitted and the reaction mixture was heated at an oil bath temperature of 73 °C giving a clear solution. The mixture was stirred under argon for another 23 h after which a hazy, viscous mixture was obtained. Insoluble components were removed by filtering over a glass filter. The solvent was removed in vacuo to yield a sticky colorless residue that was then mixed with acetonitrile (150 ml). Heating to reflux under stirring gave a clear solution, while cooling to room temperature induced precipitation of a beige, viscous material. The solution was decanted off and the residue was washed with acetonitrile (50 ml), with the acetonitrile solution again removed by decantation. The residue was mixed with ethanol (100 ml) in a round bottom flask by swirling to yield a white suspension. Filtration over a folded paper filter gave a colorless, clear filtrate that was concentrated *in vacuo* using a rotary evaporator. Drying of the residue in a vacuum oven (using KOH as drying agent) yielded a sticky, white residue (11.05 g, 42 %). This is HBP **35B.** ¹H-NMR (CDCl₃): δ = 7.78 (N-H, very broad peak), 4.60 (CH₂ bisacrylamide, bp), 3.95 (CH *N*-isopropylacrylamide, bp), 3.12 (CH₂ methacrylamide, bp), 2.5-1.0 (multiple bp), 0.91 ppm (alkyl tail CH₃); FT-IR (ATR): *v* (cm⁻¹) = 3298, 3071, 2925, 2855, 2820, 2778, 1639, 1526, 1461, 1384, 1293, 1261, 1231, 1197, 1159, 1100, 1062, 1039, 993, 913, 843, 765, 729. Number of pyridine groups as derived from ¹H NMR data: 3.3 mol/kg HBP. Tg = 73 °C.

### Example 19: HBP 39

3-(Dimethylamino)propyl methacrylamide (DAPMA, 17.22 g, 100 mmol), *N*-isopropyl acrylamide (IAA, 2.60 g, 22.7 mmol), *N*,*N'*-methylene bisacrylamide (MBAA, 1.56 g, 9.89 mmol), dodecane thiol (7.4 ml, 30.1 mmol) and AIBN (252 mg, 1.51 mmol) were mixed in ethanol (50 ml) in a 3-neck 100 ml round-bottom flask. The white suspension was purged with argon for 1 h under stirring. A reflux condenser was fitted and the viscous reaction mixture was heated at an oil bath temperature of 85 °C giving a clear solution. The mixture was stirred under argon for another 17 h after which a white suspension was obtained. Solvents were removed *in vacuo* and the residue was mixed with petroleum ether (50 ml) and refluxed for 30 min. The mixture was allowed to cool to room temperature and was then centrifuged (20 min., 4000 rpm) to give a phase-separated mixture. The turbid supernatant was decanted and the sticky residue was mixed with petroleum ether (25 ml), centrifuged once more (20 min., 4000 rpm) and decanted to give a sticky, beige, viscous substance. This solid was again mixed with petroleum ether (100 ml) and refluxed for 2 hours to give a phase separated mixture of polymer and solvent. Decanting the solvent while still hot gave a residue that was dried *in vacuo* and that was then mixed with ethanol (200 ml). The obtained mixture was refluxed for several minutes and was allowed to cool to room temperature (overnight). A white precipitate had formed, and the suspension was filtered over a folded filter paper. The filtrate was concentrated *in vacuo.* The obtained residue was mixed with petroleum ether (100 ml), this mixture was refluxed for 30 min and was then allowed to cool to room temperature. The turbid supernatant was decanted and the residue was dried in a vacuum oven at 65 °C to give HBP **39** as a sticky solid (11.6 g, 41 %). ¹H-NMR (CDCl₃): δ = 7.65 (N-H, very broad peak), 4.62 (CH₂ bisacrylamide, bp), 3.95 (CH *N*-isopropylacrylamide, bp), 3.26 (CH₂ methacrylamide, bp), 2.5-1.0 (multiple bp), 0.91 ppm (alkyl tail CH₃); FT-IR (ATR): *v* (cm⁻¹) = 3312, 2927, 2856, 2818, 2771, 1640, 1519, 1460, 1383, 1342, 1293, 1261, 1242, 1197, 1158, 1099, 1061, 1039, 993, 969, 844, 766. Number of pyridine groups as derived from ¹H NMR data: 4.5 mol/kg. HBP. Tg = 61 °C.

The above two examples 18 and 19 include extensive work-up procedures. Effective removal of the dithioether side product that is formed by the reaction of MBAA with two equivalents of dodecane may alternatively be achieved by simply diluting the reaction mixture with ethanol followed by filtration and concentration of the filtrate; the dithioether by-product does not dissolve very well in ethanol.

### Comparative Example 20: linear copolymer 49

3-(Dimethylamino)propyl methacrylamide (DAPMA, 19.82 g, 0.115 mmol), N-(2-hydroxyethyl) acrylamide (HEAA, 3.75 g, 31.6 mmol), dodecane thiol (2.85 ml, 13.9 mmol) and AIBN (252 mg, 1.51 mmol) were mixed in ethanol (50 ml) in a 2-neck 100 ml round-bottom flask. The mixture was purged with argon for 1 h under stirring. A reflux condenser was fitted and the viscous reaction mixture was heated at an oil bath temperature of 72 °C giving a clear solution. The mixture was stirred under argon for another 16 h and was subsequently concentrated in vacuo. The residue was mixed with petroleum ether (100 ml) and the solution was refluxed for 1 h. The mixture was allowed to cool to room temperature followed by decanting of the supernatant. The residue was treated with petroleum ether in this manner two more times. Drying (vacuum oven, 60 °C) gave the glassy, sticky copolymer **49.** Yield: 24.1 g (93 %). ¹H-NMR (CDCl₃): δ = 7.8 (N-H, very broad peak), 3.65 (CH₂ hydroxyethyl, bp), 3.26 (CH₂ (meth)acrylamide, bp), 2.5-1.0 (multiple bp), 0.9 ppm (alkyl tail CH₃); FT-IR (ATR): *v* (cm⁻¹) = 3323, 2926, 2858, 2820, 2776, 1634, 1525, 1462, 1383, 1292, 1260, 1229, 1199, 1159, 1099, 1061, 1039, 993, 968, 843, 765. Number of pyridine groups as derived from ¹H NMR data: 4.6 mol/kg HBP.

### Comparative Example 21: linear copolymer 50

3-(Dimethylamino)propyl methacrylamide (DAPMA, 19.85 g, 0.115 mmol), N-isopropyl acrylamide (IAA, 4.07 g, 34.9 mmol), dodecane thiol (2.85 ml, 13.8 mmol) and AIBN (252 mg, 1.51 mmol) were mixed in ethanol (50 ml) in a 2-neck 100 ml round-bottom flask. The mixture was purged with argon for 1 h under stirring. A reflux condenser was fitted and the viscous reaction mixture was heated at an oil bath temperature of 72 °C giving a clear solution. The mixture was stirred under argon for another 17 h and was subsequently concentrated in vacuo. The residue was mixed with petroleum ether (100 ml) and refluxed for 1 h. This mixture was allowed to cool to room temperature after which the supernatant was decanted. The residue was treated with petroleum ether in this manner one more time. Drying (vacuumoven, 60 °C) yielded the glassy, sticky solid **50.** Yield: 21.1 g (81 %). ¹H-NMR (CDCl₃): δ = 7.6 (N-H, very broad peak), 3.9 (CH isopropyl, bp), 3.22 (CH₂ methacrylamide, bp), 2.5-1.0 (multiple bp), 0.9 ppm (alkyl tail CH₃); FT-IR (ATR): *v* (cm⁻¹) = 3332, 2927, 2858, 2817, 2774, 1634, 1520, 1460, 1384, 1292, 1261, 1230, 1198, 1158, 1130, 1099, 1061, 1039, 993, 968, 843, 765. Number of pyridine groups as derived from ¹H NMR data: 4.7 mol/kg HBP.

### Example 22: Preparation of membrane films of HBP 35B, HBP 39, 49 and 50

HBP **35B** and HBP **39** are polyamides with pendant tertiary amine groups, while copolymers **49** and **50** may be viewed as linear counterparts of these HBPs. The 4 materials have been crosslinked with 1,10-dibromodecane to prepare anion exchange membrane films with ammonium groups. Accordingly, the appropriate amount of copolymer material was dissolved in ethanol at a concentration of 1 gram copolymer per 2.5 mL of ethanol. To the clear solution was added 0.45-0.50 mol-equivalent of 1,10-dibromodecane (0.9-1.0 molequivalent of bromides), and the mixture was stirred. From the obtained clear solution a film was cast, and the prepared film was immediately heated to 40 °C. After 5 hours, the temperature was increased to 60 °C, which temperature was maintained for ca. 30 hours to further cure the film. The membrane solution was cast on a Solupor support layer. The casting was done with a Zehnter automatic film applicator (ZAA 2300) and a Zehnter universal applicator (ZUA 2000). The casting thickness was set at 250 µm. After drying the thickness of the membrane was approximately 125 µm.

### Example 23: Anion exchange membrane performances HBP 35B, HBP 39, 49 and 50

The anion exchange membrane films as prepared in Example 22 were tested for their selectivity and resistance. See Table 5 for the results. Membrane characterization was done according to standard methods, which is described in more detail in Dlugolecki, P. et al Journal of Membrane Science 319 (2008) 214-222*.*

**Table 5: Properties of anion exchange membranes comprising crosslinked linear co-polyamides or crosslinked HBP-co-polyamides, both with quaternary ammonium exchange groups.**

| Entry | HBP-copolymer | DB of HBP-copolymer | Permselectivity (%) | Resistance (Ω·cm²) |
|---|---|---|---|---|
| **1₍₊₎** | **35B** | higher | 95.0 | 2.06 |
| **2₍₊₎** | **39** | lower | 95.4 | 1.67 |
| **3** | **49** (L) | zero | 89.2 | 1.38 |
| **4** | **50** (L) | zero | 91.0 | 1.59 |

The above data indicate that the HBP co-polyamides are more suitable for preparation of ion exchange membranes than linear co-polyamides, as higher permselectivities are attained. Electrial resistances for all materials are relatively low

### Inventive Example ₂₄Preparation of an anion exchange membrane from the unpurified HBP 40

2-(Dimethylamino)ethyl methacrylate (DAMA, 10.85 g, 67.6 mmol), 2-hydroxyethyl methacrylate (HEMA, 1.18 ml, 8.80 mmol), 1,4-butanediol dimethacrylate (di-MA, 4.25 ml, 17.8 mmol), dodecane thiol (5.0 ml, 20.3 mmol) and AlBN (190 mg, 1.13 mmol) were dissolved in ethanol (38 ml) in a 3-neck 100 ml round-bottom flask. The colorless, clear solution was purged with argon for 1 h under stirring. A reflux condenser was fitted and the reaction mixture was heated at an oil bath temperature of 73 °C under argon and stirring for 17.5 h. The solvent was evaporated using a rotary evaporator. Drying in a vacuum oven (KOH as drying agent) gave the sticky, orange residue HBP **40** (21.5 g, 100%). ¹H-NMR (CDCl₃): δ = 4.07 (ester, bp), 3.81 (alcohol, bp), 2.5-0.6 (multiple bp), 1.25 (alkyl tail CH₂), 0.88 ppm (alkyl tail CH₃); FT-IR (ATR): *v* (cm⁻¹) = 2925, 2854, 2821, 2770, 1725, 1456, 1386, 1269, 1236, 1147, 1099, 1062, 1040, 1018, 964, 851, 779, 750. Number of amine groups as derived from ¹H NMR data: 3.3 mol/kg HBP.

This crude, unpurified HBP **40** was crosslinked in a film sheet by using 1,10-dibromodecane as a crosslinker. The method for film preparation as described in Example 22 was used. Testing of the membrane characteristics gave a high permselectivity of 93.9% and a low resistance of 1.23 (Ω·cm²).

Finally, in a separate experiment, the crosslinked film that was prepared from the crude HBP **40** was washed by a two-day exposure to ethanol. Removal of non-crosslinked compounds was confirmed by ¹H-NMR examination of the concentrate of the ethanol solution. Weight loss of the film after washing was less than 1 w/w%. Repeated washing of the membrane film, even with chloroform, did not show any further removal of non-crosslinked material, proving the success of the simple one-step ethanol washing step.

### Inventive Example 25: Performance of a flow through capacitor (FTC) system based on use of a crosslinked HBP membrane material

Material HBP **10A** was prepared on a larger scale leading to a material with the following composition: molar ratios 4-VP : HEMA : di-MA : thiol = 10 : 2.6 : 2.0 : 2.3. A pyridine content of 4.3 mmol/g was recorded for this material. PDI = 6.7 and Mₙ = 1.2 kg/mol.

A crosslinked HBP membrane film with ion exchange groups was prepared from this material. Accordingly, a bottle (volume ca. 500 ml) was filled with 100 ml of ethanol and 100.5 g of the HBP that is described above was added. The solution was gently stirred by a magnetic stirrer for at least 12 hours until a homogeneous and clear solution was obtained, indicating that the HBP had fully dissolved. To 50g of the HBP solution 49.8 g of 1,6-diiodohexane crosslinker was added and the solution was again gently stirred for 6 minutes. Note that the molar ratio between pyridine groups from the HBP and the iodo groups from the crosslinker is ca. 1:2, so that the crosslinking density in the membrane film will be reduced, while the charge density will remain as high as feasible. The solution containing the HBP and crosslinker was taken from the bottle with a syringe and was coated onto a polyethylene support (Solupor 7P03A, Lydall Solutech B.V.) using Zehntner™ ZAA2300 film applicator. The coated film was cured for at least 48 hours at room temperature, which resulted in a crosslinked HBP film with a thickness of circa 50 micrometer. The crosslinked HBP film with ion exchange groups was cut into 20 pieces of 16.5 cm x 16.5 cm, and these film pieces were used in a FTC system as anion exchange membranes; 20 cell pairs were used in this FTC system. The permselectivity of several crosslinked HBP samples was higher than 91% (permselectity tests have been described in more detail in Dlugolecki, P. et al Journal of Membrane Science 319 (2008) 214-222)*.* In the same FTC system commercially available membrane Neosepta CMX (Astom Corporation) was used as the cation exchange membrane. A reference system was built, where Neosepta AMX was used as the anion exchange membrane and Neosepta CMX was used as the cation exchange membrane. The flow rate was set to 2 l/min/m² of cell area. The feed solution was flowing through 115 µm thick woven material, that served to separate the anion exchange membrane from the cation exchange membrane. Tap water with NaCl salt was used as feed water, where the conductivity of this solution was 1.5 mS/cm. All experiments were performed at room temperature.

**Table 6: The performance of FTC systems, either applying Neosepta AMX (ex Astom corporation) or applying the crosslinked HBP as anion ion exchange membrane.**

| **FTC system** | **Average deionization rate (g/m²/min)** | **Maximum removal (%)** | **Average removal (%)** |
|---|---|---|---|
| Neosepta AMX | 1.36 | 98.4 | 88.2 |
| Crosslinked HBP AEM | 1.29 | 94.8 | 84.0 |

The results above show that an initial test using HBPs in FTCs gives similar results when compared with a commercially available and optimized membrane material.

### Inventive Example 26

Example 15 is repeated, instead of using only the 1,6-diiodohexane crosslinker, 0.08 mmol of 1,6-diiodohexane (crosslinker) and 0.16 mmol of 1-iodohexane (group activator) were used in the crosslinking step instead. FT-IR spectroscopy is performed on the crosslinked membrane.

## Claims

1. Method for preparing a crosslinked hyperbranched (co)polymer with ion exchange groups providing the steps of:
- providing a hyperbranched (co)polymer being a methacrylate or acrylamide based polymer;
- providing a crosslinker;
- crosslinking the hyperbranched (co)polymer with the crosslinker;
wherein during the crosslinking step an ion exchange group is formed wherein the ion exchange group is an anion exchange group, wherein the reactive group of the hyperbranched (co)polymer is a tertiary amine, a pyridine, a guanidine and/or phosphine group and the reactive group of the crosslinker is a halide, tosylate, mesylate or triflate group
wherein the hyperbranched (co)polymer and crosslinker comprise reactive groups that are capable of reacting with each other forming a covalent bond and the quaternary ammonium, pyridinium, guanidium or phosphonium anion exchange group, wherein the hyperbranched (co)polymer is prepared by a method comprising the steps of:
- providing one or more branching monomer(s),
- providing one or more co-monomer(s),
- providing an initiator, preferably a free radical initiator, and
- reacting the branching monomer(s), the co-monomer(s), and the initiator to form a hyperbranched (co)polymer; and
wherein the hyperbranched (co)polymer comprises a branching monomer that comprises at least two vinyl groups and a co-monomer that comprises one vinyl group, wherein the vinyl groups are suitable for addition polymerization and wherein one or more of the co-monomers comprise a tertiary amine, a pyridine, a guanidine and/or phosphine group as a precursor for the anion exchange group.

2. Method according to claim 1, wherein in addition, an electrode or support layer is provided and wherein crosslinking of the hyperbranched (co)polymer with the crosslinker is performed directly on a support layer or an electrode; or wherein crosslinking of the hyperbranched (co)polymer with the crosslinker is performed first in a reactor and the subsequently transferred to a support layer or an electrode where the reaction is completed.

3. Method according to claims 1-2, wherein the crosslinker and/or hyperbranched (co)polymer comprise hydrophilic groups and/or hydrophobic groups.

4. Method according to claim 1, wherein the reaction step is an addition polymerization, preferably a free-radical polymerization reaction, and wherein
- the molar ratio of co-monomer: branching monomer: chain transfer agent is about 5-80 : 0.5-20 : 1-30, and/or
- the molar ratio of monomer: branching monomer is lower than 100:1, preferably lower than 16:1, more preferably lower than 11:1, most preferably lower than 7:1.

5. Method according to claims 1-4, wherein
the branching monomer is a di(meth)acrylate, and/or a bisacrylamide, preferably a 1,4-butanediol dimethacrylate and/or methylene bisacrylamide;
and wherein
the co-monomer is a vinyl-aryl, a (meth)acrylate, and/or a (meth)acrylamide, preferably a 4-vinylpyridine, 2-hydroxyethyl-methacrylate, methylmethacrylate, (dimethylamino)ethyl methacrylate, 3-(dimethylamino)propyl methacrylamide, N-(2-hydroxyethyl)-acrylamide and/or N-isopropylacrylamide..

6. A crosslinked hyperbranched (co)polymer with ion exchange groups obtainable or obtained by the method of claims 1-5, preferably in the form of a sheet.

7. An ion exchange membrane comprising the crosslinked hyperbranched (co)polymer with ion exchange groups according to claim 6, wherein preferably the thickness of the sheet is less than 200 micrometer, preferably less than 100 micrometer, more preferably less than 60 micrometer.

8. An apparatus for removal of ions wherein the apparatus comprises an ion exchange membrane according to claim 7.

9. An apparatus for removal of ions according to claim 8, the apparatus further being provided with a housing comprising:
a water inlet for letting water in the housing;
a water outlet for letting water out of the housing;
a first and second electrode;
a spacer between the first and second electrode for allowing water to flow in between the first and second electrode; and
an ion exchange membrane between the first and/or second electrode and the spacer according to claim 7.

10. Use of a crosslinked hyperbranched (co)polymer with ion exchange groups or a crosslinked hyperbranched (co)polymer with ion exchange groups according to claim 6 on an electrode, or an ion exchange membrane according to claim 7, or an apparatus according to claim 8, for the removal of ions from water.

## Patentansprüche

1. Verfahren zur Herstellung eines vernetzten hyperverzweigten (Co)polymers mit lonenaustauschgruppen mit den folgenden Schritten:
- Bereitstellen eines hyperverzweigten (Co)polymers, bei dem es sich um ein Polymer auf Basis von Methacrylat oder Acrylamid handelt;
- Bereitstellen eines Vernetzers;
- Vernetzen des hyperverzweigten (Co)polymers mit dem Vernetzer;
wobei während des Vernetzungsschritts eine lonenaustauschgruppe gebildet wird, wobei es sich bei der Ionenaustauschgruppe um eine Anionenaustauschgruppe handelt, wobei es sich bei der reaktiven Gruppe des hyperverzweigten (Co)polymers um eine tertiäre Amin-, eine Pyridin-, eine Guanidin- und/oder Phosphingruppe handelt und es sich bei der reaktiven Gruppe des Vernetzers um eine Halogenid-, Tosylat-, Mesylat- oder Triflatgruppe handelt,
wobei das hyperverzweigte (Co)polymer und der Vernetzer reaktive Gruppen umfassen, die miteinander unter Bildung einer kovalenten Bindung und der quaternären Ammonium-, Pyridinium-, Guanidium- oder Phosphonium-Anionenaustauschgruppe reagieren können, wobei das hyperverzweigte (Co)polymer durch ein Verfahren hergestellt wird, das folgende Schritte umfasst:
- Bereitstellen eines oder mehrerer verzweigender Monomere,
- Bereitstellen eines oder mehrerer Comonomere,
- Bereitstellen eines Initiators, vorzugsweise eines Radikalinitiators und
- Umsetzen des verzweigenden Monomers bzw. der verzweigenden Monomere, des Comonomers bzw. der Comonomere und des Initiators zu einem hyperverzweigten (Co)polymer; und
wobei das hyperverzweigte (Co)polymer ein verzweigendes Monomer mit mindestens zwei Vinylgruppen und ein Comonomer mit einer Vinylgruppe umfasst, wobei die Vinylgruppen für die Additionspolymerisation geeignet sind und wobei eines oder mehrere der Comonomere eine tertiäre Amin-, eine Pyridin-, eine Guanidin- und/oder Phosphingruppe als Vorstufe für die Anionenaustauschgruppe umfasst bzw. umfassen.

2. Verfahren nach Anspruch 1, wobei zusätzlich eine Elektrode oder Trägerschicht bereitgestellt wird und wobei die Vernetzung des hyperverzweigten (Co)polymers mit dem Vernetzer direkt auf einer Trägerschicht oder einer Elektrode durchgeführt wird oder wobei die Vernetzung des hyperverzweigten (Co)polymers mit dem Vernetzer zunächst in einem Reaktor durchgeführt und danach auf eine Trägerschicht oder eine Elektrode übertragen wird, wo die Reaktion abgeschlossen wird.

3. Verfahren nach den Ansprüchen 1-2, wobei der Vernetzer und/oder das hyperverzweigte (Co)polymer hydrophile Gruppen und/oder hydrophobe Gruppen umfassen.

4. Verfahren nach Anspruch 1, wobei es sich bei dem Reaktionsschritt um eine Additionspolymerisation, vorzugsweise eine Radikalpolymerisationsreaktion, handelt und wobei
- das Molverhältnis Comonomer : verzweigendes Monomer : Kettenübertragungsmittel etwa 5-80 : 0,5-20 : 1-30 beträgt und/oder
- das Molverhältnis Monomer verzweigendes Monomer kleiner als 100:1, vorzugsweise kleiner als 16:1, weiter bevorzugt kleiner als 11:1 und ganz besonders bevorzugt kleiner als 7:1 ist.

5. Verfahren nach den Ansprüchen 1-4, wobei
es sich bei dem verzweigenden Monomer um ein Di(meth)acrylat und/oder ein Bisacrylamid, vorzugsweise ein 1,4-Butandioldimethacrylat und/oder Methylenbisacrylamid handelt
und wobei
es sich bei dem Comonomer um ein Vinylaryl, ein (Meth)acrylat und/oder ein (Meth)acrylamid, vorzugsweise ein 4-Vinylpyridin, 2-Hydroxyethylmethacrylat, Methylmethacrylat, (Dimethylamino)ethylmethacrylat, 3-(Dimethylamino)propylmeth-acrylamid, N-(2-Hydroxyethyl)acrylamid und/oder N-Isopropylacrylamid, handelt.

6. Vernetztes hyperverzweigtes (Co)polymer mit Ionenaustauschgruppen, erhältlich oder erhalten durch das Verfahren der Ansprüche 1-5, vorzugsweise in Form einer Folie.

7. Ionenaustauschermembran, umfassend das vernetzte hyperverzweigte (Co)polymer mit lonenaustauschgruppen nach Anspruch 6, wobei die Dicke der Folie vorzugsweise weniger als 200 Mikrometer, vorzugsweise weniger als 100 Mikrometer und weiter bevorzugt weniger als 60 Mikrometer beträgt.

8. Vorrichtung zur Entfernung von Ionen, wobei die Vorrichtung eine Ionenaustauschermembran nach Anspruch 7 umfasst.

9. Vorrichtung zur Entfernung von Ionen nach Anspruch 8, wobei die Vorrichtung ferner mit einem Gehäuse ausgestattet ist, das Folgendes umfasst:
einen Wassereinlass zum Einlassen von Wasser in das Gehäuse;
einen Wasserauslass zum Auslassen von Wasser aus dem Gehäuse;
eine erste und zweite Elektrode;
einen Abstandhalter zwischen der ersten und zweiten Elektrode, der gewährleistet, dass zwischen der ersten und zweiten Elektrode Wasser fließen kann; und
eine Ionenaustauschermembran zwischen der ersten und/oder zweiten Elektrode und dem Abstandhalter nach Anspruch 7.

10. Verwendung eines vernetzten hyperverzweigten (Co)polymers mit lonenaustauschgruppen oder eines vernetzten hyperverzweigten (Co)polymers mit Ionenaustauschgruppen nach Anspruch 6 auf einer Elektrode oder einer Ionenaustauschermembran nach Anspruch 7 oder einer Vorrichtung nach Anspruch 8 zur Entfernung von Ionen aus Wasser.

## Revendications

1. Procédé pour préparer un (co)polymère hyper-ramifié réticulé ayant des groupes d'échange d'ions comprenant les étapes de :
- fournir un (co)polymère hyper-ramifié étant un polymère à base de méthacrylate ou d'acrylamide ;
- fournir un agent de réticulation ;
- réticuler le (co)polymère hyper-ramifié avec l'agent de réticulation ;
dans lequel, durant l'étape de réticulation, un groupe d'échange d'ions est formé, dans lequel le groupe d'échange d'ions est un groupe d'échange d'anions, dans lequel le groupe réactif du (co)polymère hyper-ramifié est une amine tertiaire, une pyridine, une guanidine et/ou un groupe phosphine, et le groupe réactif de l'agent de réticulation est un groupe halogénure, un groupe tosylate, un groupe mésylate ou un groupe triflate ;
dans lequel le (co)polymère hyper-ramifié et l'agent de réticulation comprennent des groupes réactifs qui sont capables de réagir entre eux pour former une liaison covalente et le groupe d'échange d'anions ammonium quaternaire, pyridinium, guanidium ou phosphonium ;
dans lequel le (co)polymère hyper-ramifié est préparé par une méthode comprenant les étapes de :
- fournir un ou plusieurs monomères ramifiés,
- fournir un ou plusieurs comonomères,
- fournir un initiateur, de préférence un initiateur à radicaux libres, et
- faire réagir le ou les monomères ramifiés, le ou les comonomères et l'initiateur pour former un (co)polymère hyper-ramifié ; et
dans lequel le (co)polymère hyper-ramifié comprend un monomère ramifié qui comprend au moins deux groupes vinyles et un comonomère qui comprend un groupe vinyle, dans lequel les groupes vinyles conviennent à une polymérisation par addition, et dans lequel un ou plusieurs des comonomères comprennent une amine tertaire, une pyridine, une amine, une guanidine et/ou un groupe phosphine comme précurseur pour le groupe d'échange d'anions.

2. Un procédé selon la revendication 1, dans lequel, en outre, une électrode ou couche de support est fournie et dans lequel une réticulation du (co)polymère hyper-ramifié avec l'agent de réticulation est effectuée directement sur une couche de support ou une électrode ; ou dans lequel une réticulation du (co)polymère hyper-ramifié est d'abord effectuée dans un réacteur et par la suite transférée sur une couche support ou une électrode où la réaction est complétée.

3. Un procédé selon la revendication 1 ou la revendication 2, dans lequel l'agent de réticulation et/ou le (co)polymère hyper-ramifié comprennent des groupes hydrophiles et/ou des groupes hydrophobes.

4. Un procédé selon la revendication 1, dans lequel l'étape de réaction est de préférence une polymérisation par addition, de préférence une réaction de polymérisation par un radical libre, et dans lequel
- le rapport molaire comonomère : monomère ramifié : agent de transfert de chaîne est environ 5-80 : 0,5-20 : 1-30, et/ou
- le rapport molaire monomère: monomère ramifié est inférieur à 100: 1, préférablement inférieur à 16 : 1, plus préférablement inférieur à 11 : 1, encore plus préférablement inférieur à 7 : 1.

5. Un procédé selon l'une quelconque des revendications 1 à 4, dans lequel le monomère ramifié est un di(méth) acrylate et/ou un bisacrylamide, de préférence un 1,4-butanediol diméthacrylate et/ou du méthylène bisacrylamide ; et dans lequel le comonomère est un vinylaryle, un (méth) acrylate et/ou un (méth) acrylamide, préférablement 4-vinylpyridine, 2-hydroxyéthyle méthacrylate, méthyleméthacrylate, un diméthylaminoéthyle méthacrylate, un 3- (diméthylamino) propyle méthacrylamide, un N-(2-hydroxyéthyl)-acrylamide et/ou N-isopropylacrylamide.

6. Un (co)polymère hyper-ramifié réticulé pouvant être obtenu ou étant obtenu par le procédé selon l'une quelconque des revendications 1 à 5, préférablement sous la forme d'une feuille.

7. Une membrane d'échange d'ions comprenant le (co)polymère hyper-ramifié réticulé ayant des groupes d'échange d'ions selon la revendication 6, dans laquelle l'épaisseur de la feuille est préférablement moins de 200 micromètres, plus préférablement moins de 100 micromètres, encore plus préférablement moins de 60 micromètres.

8. Un appareil d'élimination d'ions dans lequel l'appareil comprend la membrane d'échange d'ions selon la revendication 7.

9. Un appareil d'élimination d'ions selon la revendication 8, l'appareil étant de plus fourni avec un logement comprenant :
une entrée d'eau pour amener de l'eau dans le logement ;
une sortie d'eau pour laisser sortir de l'eau du logement ;
une première et une second électrode ;
une cale d'espacement entre la première électrode et la seconde électrode pour permettre à l'eau de s'écouler entre la première électrode et la seconde électrode ; et
une membrane d'échange d'ions selon la revendication 7 entre la première électrode ou la seconde électrode et la cale d'espacement.

10. Utilisation d'un (co)polymère hyper-ramifié réticulé ayant un groupe d'échange d'ions, ou un (co)polymère hyper-ramifié réticulé ayant un groupe d'échange d'ions selon la revendication 6 sur une électrode, ou une membrane d'échange d'ion selon la revendication 7, ou un appareil selon la revendication 8 pour élimination d'ions de l'eau.
